# EUROPÄISCHE PATENTSCHRIFT

(11) **EP 3 601 398 B1**
(45) Veröffentlichungstag und Bekanntmachung des Hinweises auf die Patenterteilung: **28.04.2021**
(21) Anmeldenummer: 18711985.4
(22) Anmeldetag: 26.03.2018
(51) Int. Cl.: C08G 18/48, C08G 18/79, C08L 75/16, B33Y 70/00, C08G 18/81, C08G 18/24

(54) **DUAL CURE-VERFAHREN UNTER VERWENDUNG VON THERMISCH LATENTEN ZINNKATALYSATOREN**
DUAL CURE METHOD USING THERMALLY LATENT TIN CATALYSTS
PROCÉDÉ DE POLYMÉRISATION DOUBLE AU MOYEN DE CATALYSEURS À L'ÉTAIN LATENTS PAR VOIE THERMIQUE

(30) Priorität: 27.03.2017 EP 17162957
(43) Veröffentlichungstag der Anmeldung: 05.02.2020
(73) Patentinhaber: Covestro Deutschland AG, 51373 Leverkusen (DE)
(72) Erfinder: ACHTEN, Dirk, 51375 Leverkusen (DE); BÜSGEN, Thomas, 51377 Leverkusen (DE); TOMCZYK, Christoph, 51379 Leverkusen (DE); WEIKARD, Jan, 51375 Leverkusen (DE); RICHTER, Frank, 51373 Leverkusen (DE); WAGNER, Roland, 51375 Leverkusen (DE)
(74) Vertreter: Levpat
(86) Internationale Anmeldenummer: PCT/EP2018/057668
(87) Internationale Veröffentlichungsnummer: WO 2018/178025

(56) Entgegenhaltungen:
- WO-A1-2009/050115
- DE-A1-102009 051 445

## Beschreibung

Die vorliegende Erfindung betrifft ein Verfahren zur Herstellung eines Gegenstands aus einem Aufbaumaterial, wobei das Aufbaumaterial radikalisch vernetzbare Gruppen, NCO-Gruppen sowie Gruppen mit Zerewitinoff-aktiven H-Atomen umfasst und der Gegenstand ein dreidimensionaler Gegenstand und/oder eine Schicht ist. Während und/oder nach der Herstellung des Gegenstands wird das Aufbaumaterial auf eine Temperatur von ≥ 50 °C erwärmt und das Aufbaumaterial umfasst eine oder mehrere spezielle Zinnverbindungen. Die Erfindung betrifft ebenfalls einen durch das erfindungsgemäße Verfahren hergestellten Gegenstand sowie die Verwendung spezieller Zinnverbindungen in additiven Fertigungsverfahren.

Beschichtungsmittel, die durch zwei unabhängige Prozesse aushärten, werden allgemein als Dual Cure-Systeme bezeichnet. Üblicherweise besitzen die enthaltenen Bindemittelkomponenten dabei unterschiedliche funktionelle Gruppen die unter geeigneten Bedingungen in der Regel unabhängig voneinander miteinander vernetzen. Übliche zum Stand der Technik gehörende Dual Cure-Systeme besitzen strahlen- sowie thermisch härtbare Gruppen, wobei besonders vorteilhafte Eigenschaften bei Verwendung von Isocyanat- und Hydroxygruppen als thermisch vernetzende Funktionen erhalten werden. Nachteilig an solchen Lösungen ist jedoch, dass die Reaktivität der NCO Gruppen und/oder die Anwesenheit von Katalysatoren für den zweiten Härtungsmechnismus die Topfzeit des Beschichtungsmittels begrenzt.

Eine Klasse von Dual Cure-Systemen enthält blockierte Isocyanate. Nach einer Deblockierung bei geeigneter Temperatur stehen die NCO-Gruppen für Reaktionen mit Polyolen zur Verfügung. Nachteilig bei der Verwendung von blockierten Isocyanaten sind die für blockierte Isocyanate typische hohe Viskosität und die üblicherweise sehr hohe Deblockierungstemperatur.

Dual Cure-Systeme können in Beschichtungsanwendungen und bei Verwendung als Klebstoffe Vorteile bei der sogenannten Schattenhärtung aufweisen. Hierunter ist derjenige Härtungsmechanismus zu verstehen, welcher nicht photochemisch, sondern beispielsweise thermisch abläuft. Dann kann das Beschichtungs- oder Klebmittel auch bei komplex geformten Substraten mit Abschattungen gegenüber einer Belichtungslampe weiter aushärten.

Im Lack- und Klebstoffbereich existieren mehrere Hauptgruppen der Dual Cure-Technologie: zwei verschiedene Radikalstarter (UV und thermisch), UV- und Feuchtigkeitsnachhärtung, UV- und PUR-2K-Härtung und eine kationisch katalysierte UV- und thermisch Härtung. Von der Firma Berlac AG wird beispielsweise unter der Bezeichnung Berlac 082.907 ein Dual Cure-Lacksystem angeboten, in dem zunächst eine Reaktion zwischen NCO-Gruppen und OH-Gruppen ausgelöst wird und dann einer UV-Härtung unterworfen wird.

Eine weitere denkbare Anwendung von Dual Cure-Systemen ist in additiven Fertigungsverfahren ("3D-Druck"). Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen, Bohren oder Zerspanen. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Eine Gruppe von additiven Fertigungsverfahren setzt radikalisch vernetzbare Harze ein, welche gegebenenfalls über einen zweiten Härtungsmechanismus ihre Endfestigkeit im gebildeten Gegenstand erhalten. Beispiele für solche Verfahren sind Stereolithographieverfahren und das davon abgeleitete sogenannte DLP-Verfahren.

US 2016136889 A1 offenbart ein Verfahren zum Bilden eines dreidimensionalen Objekts aus einem Dual-Cure-System, enthaltend eine Mischung von einer ersten polymerisierbaren flüssigen Komponente und einer zweiten verfestigbaren Komponente, die sich von der ersten Komponente unterscheidet. Dieses wird zunächst in einem 3D-Druck-Verfahren bestrahlt, um ein festes Zwischenprodukt aufzubauen, die zweite verfestigbare Komponente enthalten, die in dem Gerüst in nichtverfestigter und / oder ungehärteter Form getragen wird. Gleichzeitig mit oder nach dem Bestrahlungsschritt die zweiten Komponente in dem dreidimensionalen Zwischenprodukt verfestigt, um das dreidimensionale Objekt zu bilden.

Für den 3D-Druck bedeuten die Nachteile von konventionellen Dual Cure-Systemen hinsichtlich der Topfzeit, dass ein nicht gebrauchtes Aufbaumaterial schlecht wiederverwendet werden kann bzw. die geplanten Bauzeiten für ein Produkt die Topfzeit nicht überschreiten dürfen.

DE 10 2009 051445 A1 offenbart Polyisocyanat-Polyadditionsprodukte erhältlich aus
a) mindestens einem aliphatischen, cycloaliphatischen, araliphatischen und/oder aromatischen Polyisocyanat
b) mindestens einer NCO-reaktiven Verbindung
c) mindestens einem thermolatenten anorganischen Zinn-enthaltenden Katalysator
d) gegebenenfalls weiteren von c) verschiedenen Katalysatoren und/oder Aktivatoren
e) gegebenenfalls Füllstoffen, Pigmenten, Additiven, Verdickern, Entschäumern und/oder anderen Hilfs- und Zusatzstoffen,
wobei das Verhältnis des Gewichts des Zinns aus Komponente c) und des Gewichts der Komponente a) weniger als 3000 ppm beträgt, wenn Komponente a) ein aliphatisches Polyisocyanat ist und weniger als 95 ppm beträgt, wenn Komponente a) ein aromatisches Polyisocyanat ist und wobei als thermolatente Katalysatoren die folgenden zyklischen Zinnverbindungen eingesetzt werden:

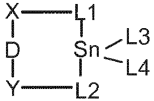

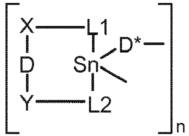

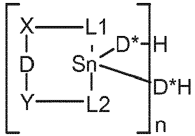

Eine Aufgabe der vorliegenden Erfindung ist es, mindestens einen Nachteil des Standes der Technik wenigstens zu einem Teil zu überwinden. Weiterhin stellt sich die Erfindung die Aufgabe, ein Fertigungsverfahren bereitzustellen, bei dem die herzustellenden Gegenstände aus einem Dual Cure-Aufbaumaterial möglichst kosteneffizient und/oder individualisiert und/oder ressourcenschonend erhalten werden können, was insbesondere die Wiederverwertbarkeit von Aufbaumaterial betrifft.

Erfindungsgemäß gelöst wird die Aufgabe durch ein Verfahren gemäß Anspruch 1, einen Gegenstand gemäß Anspruch 14 und eine Verwendung gemäß Anspruch 15. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Herstellung eines Gegenstands aus einem Aufbaumaterial, wobei das Aufbaumaterial radikalisch vernetzbare Gruppen, NCO-Gruppen sowie Gruppen mit Zerewitinoff-aktiven H-Atomen umfasst und der Gegenstand ein dreidimensionaler Gegenstand und/oder eine Schicht ist, zeichnet sich dadurch aus, dass während und/oder nach der Herstellung des Gegenstands das Aufbaumaterial auf eine Temperatur von ≥ 50 °C erwärmt wird und dass das Aufbaumaterial eine oder mehrere zyklische Zinnverbindungen der Formel F-I, F-II und/oder F-III umfasst: 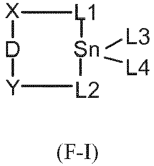 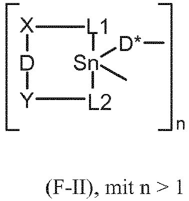 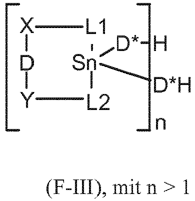 wobei gilt:
D steht für -O-, -S- oder -N(R1)-
   wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 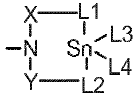 steht, oder R1 und L3 zusammen für -Z-L5- stehen;
D* steht für -O- oder -S-;
X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)- oder ortho-Arylenresten der Formeln 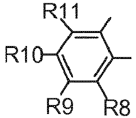 oder 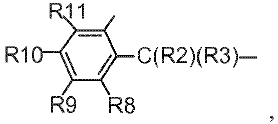 wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, -OC(=S)-, -SC(=O)-, - SC(=S)-, -OS(=O)₂O-, -OS(=O)₂- oder -N(R12)-,
   wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Ha1, -OC(=O)R14, -SR15, - OC(=S)R16, -OS(=O)₂OR17, -OS(=O)₂R18 oder -NR19R20, oder L3 und L4 zusammen stehen für -L1-X-D-Y-L2-,
   wobei für R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.

Die durch das erfindungsgemäße Verfahren erhaltene Schicht kann an einer Seite, an mehreren Seiten oder an keiner Seite eine oder mehrere weitere Oberflächen kontaktieren. Demgemäß kann es sich bei der Schicht um eine Beschichtung, eine Klebeverbindung oder einen freitragenden Film handeln.

Durch das erfindungsgemäße Verfahren gebildete dreidimensionale Gegenstände können Gegenstand in Aufbaurichtung seines Herstellungsverfahrens wenigstens abschnittsweise eine Höhe von ≥ 1 mm aufweisen. So erhaltene Beschichtungen und Klebeverbindungen können Dicken von ≥ 5 µm bis ≤ 800 µm aufweisen und so erhaltene Filme Dicken von ≥ 30 µm bis ≤ 500 µm.

Die Zinnverbindungen der Formeln F-I, F-II und F-III weisen unterhalb einer bestimmten Temperatur keine technisch sinnvolle katalytische Aktivität für die Reaktion von NCO-Gruppen mit funktionellen Gruppen, welche Zerewitinoff-aktive H-Atome tragen, auf. Insbesondere seien hierbei Urethanisierungen und Harnstoffbildungen zu nennen. Oberhalb einer bestimmten Temperatur steigt jedoch die katalytische Aktivität stark an. Ohne auf eine Theorie beschränkt zu sein wird angenommen, dass die intramolekularen Donor-Akzeptor-Wechselwirkungen in den erfindungsgemäß eingesetzten hypervalenten Zinnverbindungen bzw. aus letzteren in der Matrix gebildeten Folgeprodukten bei höherer Temperatur geschwächt werden und somit das bei niedriger Temperatur (reversibel) blockierte Zentralatom dann für die katalysierte Reaktion zur Verfügung steht. Insofern lässt sich von thermisch latenten Katalysatoren sprechen. Dadurch, dass die im Aufbaumaterial vorliegenden NCO-Gruppen unterhalb dieser Temperatur nicht abreagieren, kann das Aufbaumaterial auch leicht wiederverwertet werden. Erfindungsgemäß wird zur Aktivierung des Sn-Katalysators auf eine Temperatur von ≥ 50 °C, vorzugsweise ≥ 65 °C, mehr bevorzugt ≥ 80 °C, besonders bevorzugt ≥ 80 °C bis ≤ 200 °C erwärmt, so dass nach erfolgter Reaktion der NCO-Gruppen der Gegenstand erhalten wird. Das Erwärmen kann für eine Zeitspanne von ≥ 1 Minute, bevorzugt ≥ 5 Minuten, mehr bevorzugt ≥ 10 Minuten bis ≤ 24 Stunden bevorzugt ≤ 8 Stunden, besonders bevorzugt < 4 Stunden, erfolgen.

Vorzugsweise ist die katalytische Aktivität des thermolatenten Katalysators in dem Aufbaumaterial für das erfindungsgemäße Verfahren so gestaltet, das das Aufbaumaterial eine Topfzeit (definiert als die Zeit, in der sich die Viskosität des Materials verdoppelt) bei 23°C von > 1 h, bevorzugt > 2 h, besonders bevorzugt > 4 h und ganz besonders bevorzugt > 6 h aufweist.

Vor allem in den Fällen, in denen die Zinnverbindungen der Formeln F-I, F-II und/oder F-III Liganden mit freien OH- und/oder NH-Resten aufweisen, kann der Katalysator bei der Polyisocyanat-Polyadditionsreaktion in das Produkt eingebaut werden. Besonderer Vorteil dieser einbaubaren Katalysatoren ist ihr stark reduziertes Fogging-Verhalten.

Die verschiedenen Herstellungsmethoden für die erfindungsgemäß zu verwendenden Zinn(IV)-Verbindungen bzw. ihrer Zinn(II)-Precursoren sind u.a. beschrieben in: J. Organomet. Chem. 2009 694 3184-3189, Chem. Heterocycl. Comp. 2007 43 813-834, Indian J. Chem. 1967 5 643-645 sowie in darin angeführter Literatur.

Der Gewichtsanteil der Zinnverbindungen der Formeln F-I, F-II und/oder F-III im Aufbaumaterial kann vom Typ der dem Aufbaumaterial zugrunde liegenden Isocyanate abhängig gemacht werden. So kann, wenn an ein aromatisches C-Atom gebundene NCO-Gruppen dominieren, der Gehalt ≤ 100 ppm, bezogen auf das Gesamtgewicht des Aufbaumaterials, betragen. Wenn an ein aliphatisches C-Atom gebundene NCO-Gruppen dominieren, der Gehalt ≤ 3000 ppm, bezogen auf das Gesamtgewicht des Aufbaumaterials, betragen.

Als Quelle von NCO-Gruppen im Aufbaumaterial eignen sich die dem Fachmann an sich bekannten organischen aliphatischen, cycloaliphatischen, araliphatischen und/oder aromatischen Polyisocyanate mit mindestens zwei Isocyanatgruppen pro Molekül sowie Gemische davon. Beispielsweise können NCO-terminierte Prepolymere eingesetzt werden.

Als NCO-reaktive Verbindungen mit Zerewitinoff-aktiven H-Atomen können alle dem Fachmann bekannten Verbindungen eingesetzt werden, welche eine mittlere OH- bzw. NH-Funktionalität von mindestens 1,5 aufweisen. Dies können beispielsweise niedermolekulare Diole (z. B. 1,2-Ethandiol, 1,3- bzw. 1,2-Propandiol, 1,4-Butandiol, 1,5-Petandiol, 1,6-Hexandiol), Triole (z. B. Glycerin, Trimethylolpropan) und Tetraole (z. B. Pentaerythrit) sein, kurzkettige Aminoalkohole, Polyamine aber auch höhermolekulare Polyhydroxyverbindungen wie Polyetherpolyole, Polyesterpolyole, Polycarbonatpolyole, Polysiloxanpolyole, Polyamine und Polyetherpolyamine sowie Polybutadienpolyole.

Das Aufbaumaterial umfasst radikalisch vernetzbare Gruppen, vorzugsweise (Meth)Acrylatgruppen. Sie können durch thermische und/oder durch photochemische Radikalstarter eine Vernetzungsreaktion untereinander eingehen. Daher lässt sich das Aufbaumaterial auch als radikalisch vernetzbares Aufbaumaterial oder radikalisch vernetzbares Harz beschreiben. Ferner handelt es sich gemäß der obigen Definition um ein Dual Cure-System.

Vorzugsweise umfasst das radikalisch vernetzbare Aufbaumaterial eine Verbindung, die aus der Reaktion eines NCO-terminierten Polyisocyanatprepolymers mit einem, bezogen auf die freien NCO-Gruppen, molaren Unterschuss eines Hydroxyalkyl(meth)acrylats erhältlich ist.

Ebenfalls vorzugsweise umfasst das radikalisch vernetzbare Aufbaumaterial eine Verbindung, die aus der Reaktion eines NCO-terminierten Polyisocyanurats mit einem, bezogen auf die freien NCO-Gruppen, molaren Unterschuss eines Hydroxyalkyl(meth)acrylats erhältlich ist.

Geeignete Polyisocyanate zur Herstellung der NCO-terminierten Polyisocyanurate und Prepolymere sind beispielsweise solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3- und 1,4-Bis(1-isocyanato-l-methylethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate.

Ferner können erfindungsgemäß auch aliphatische und/oder aromatische Isocyanat-Endgruppen tragende Prepolymere, wie beispielsweise aliphatische oder aromatische Isocyanat-Endgruppentragende Polyether-, Polyester-, Polyacrylat, Polyepoxyd oder Polycarbonat-Prepolymere als Edukte der Isocyanurat-Bildung eingesetzt werden. Geeignete Trimerisierungskatalysatoren werden weiter unten im Zusammenhang mit einer anderen Ausführungsform beschrieben.

Geeignete Hydroxyalkyl(meth)acrylate sind unter anderem Alkoxyalkyl(meth)acrylate mit 2 bis 12 Kohlenstoffatomen im Hydroxyalkylrest. Bevorzugt sind 2-Hydroxyethylacrylat, das bei der Anlagerung von Propylenoxid an Acrylsäure entstehende Isomerengemisch oder 4-Hydroxybutylacrylat.

Die Reaktion zwischen dem Hydroxyalkyl(meth)acrylat und dem NCO-terminierten Polyisocyanurat kann durch die üblichen Urethanisierungskatalysatoren wie DBTL katalysiert werden. Bei dieser Reaktion kann das molare Verhältnis zwischen NCO-Gruppen und OH-Gruppen des Hydroxyalkyl(meth)acrylats in einem Bereich von ≥10:1 bis ≤ 1,1:1 (bevorzugt ≥ 5:1 bis ≤ 1,5:1, mehr bevorzugt ≥ 4:1 bis ≤ 2:1) liegen. Die erhaltene härtbare Verbindung kann ein zahlenmittleres Molekulargewicht Mₙ von ≥ 200 g/mol bis ≤ 5000 g/mol aufweisen. Vorzugsweise beträgt dieses Molekulargewicht ≥ 300 g/mol bis ≤ 4000 g/mol, mehr bevorzugt ≥ 400 g/mol bis ≤ 3000 g/mol.

Besonders bevorzugt ist eine härtbare Verbindung, die aus der Reaktion eines NCO-terminierten Polyisocyanurats mit Hydroxethyl(meth)acrylat erhalten wurde, wobei das NCO-terminierte Polyisocyanurat aus 1,6-Hexamethylendiisocyanat in Gegenwart eines Isocyanat-Trimerisierungskatalysators erhalten wurde. Diese härtbare Verbindung hat ein zahlenmittleres Molekulargewicht Mₙ von ≥ 400 g/mol bis ≤ 3000 g/mol und ein molares Verhältnis von NCO-Gruppen und olefinischen C=C-Doppelbindungen in einem Bereich von ≥ 1:5 bis ≤ 5:1. besonders bevorzugt ≥1:3 bis ≤ 3:1, ganz besonders bevorzugt. ≥1:2 bis ≤ 2:1.

Das radikalisch vernetzbare Aufbaumaterial kann weiterhin Additive wie Füllstoffe, UV-Stabilisatoren, Radikalinhibitoren, Antioxidantien, Formtrennmittel, Wasserfänger, Slipadditive, Entschäumer, Verlaufsmittel, Rheologieadditive, Flammschutzmittel und/oder Pigmente enthalten. Diese Hilfs- und Zusatzmittel, ausgenommen Füllstoffe und Flammschutzmittel, liegen üblicherweise in einer Menge von weniger als 50 Gew.-%, vorzugsweise weniger als 30 Gew.-%, besonders bevorzugt bis zu 20 Gew.-%, besonders bevorzugt bis zu 10 Gew.-%, bezogen auf das radikalisch vernetzbare Harz vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf das Gesamtgewicht des radikalisch vernetzbaren Aufbaumaterials vor.

Geeignete Füllstoffe sind beispielsweise AlOH₃, CaCO₃, geschnittene Glasfasern, Karbonfasern, Polymerfasern, Metallpigmente wie TiO₂ und weitere bekannte übliche Füllstoffe. Diese Füllstoffe werden vorzugsweise in Mengen von höchstens 70 Gew.-%, bevorzugt höchstens 50 Gew.-%, besonders bevorzugt höchstens 30 Gew.-%, berechnet als Gesamtmenge an eingesetzten Füllstoffen bezogen auf das Gesamtgewicht des radikalisch vernetzbaren Harzes, eingesetzt.

Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyL-1-4-piperidinyl)-sebacat, Bis-(2,2,6,6-tetrainethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3 -tetramethylbutyl)phenol, 2-(2H-Benzotriazol-2-yl)-6-(1-methyl-1 -phenylethyl)-4-(1,1,3,3 -tetramethylbutyl)phenol, Isooctyl-3-(3 -(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxybenzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren sind solche, die Strahlung einer Wellenlänge < 400 nm vollständig absorbieren. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3 -tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren dem radikalisch vernetzbaren Aufbaumaterial vorzugsweise in Mengen von 0,001 bis 3,0 Gew.-%, besonders bevorzugt 0,005 bis 2 Gew.-%, berechnet als Gesamtmenge an eingesetzten UV-Stabilisatoren bezogen auf das Gesamtgewicht des radikalisch vernetzbaren Aufbaumaterials, zugesetzt.

Geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden. Diese Antioxidantien werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf das Gesamtgewicht des radikalisch vernetzbaren Aufbaumaterials, eingesetzt.

Geeignete Radikalinhibitoren bzw. Verzögerer sind besonders solche, die eine unkontrollierte radikalische Polymerisation der Harzformulierung außerhalb des gewünschten (bestrahlten) Bereiches gezielt inhibieren. Diese sind für eine gute Randschärfe und Abbildungsgenauigkeit im Vorläufer entscheidend. Geeignete Radikalinhibitoren müssen entsprechend der gewünschten Radikalausbeute aus dem Bestrahlungs-/Belichtungsschritt und der Polymerisationsgeschwindigkeit und Reaktivität/Selektivität der Doppelbindungsträger ausgesucht werden. Geeignete Radikalinhibitoren sind z. B. 2,2-(2,5-thiophencliyl)bis(5-tertbutylbenzoxazol), Phenothiazin, Hydrochinone, Hydrochinonether, Quinonalkyde und Nitroxylverbindungen sowie Mischungen davon, Benzoquinone, Kupfer Salze, Brenzcatechine, Cresole, Nitrobenzol und Sauerstoff. Diese Antioxidantien werden vorzugsweise in Mengen von 0,001 Gew% bis 3 Gew.% eingesetzt.

Vorzugsweise ist die molare Konzentration von Zerewitinoff-aktiven H-Atomen im Verhältnis zu freien Isocyanaten ≥ 0,6 und ≤ 1,5, bevorzugt, ≥ 0,8 und ≤ 1,4, besonders bevorzugt, ≥ 0,9 und ≤ 1,3, und ganz besonders bevorzugt ≥ 1und ≤ 1,2.

In einer bevorzugten Ausführungsform ist der Gegenstand ein dreidimensionaler Gegenstand, der Gegenstand wird aus einem Vorläufer erhalten und das Verfahren umfasst die Schritte:
I) Abscheiden von radikalisch vernetztem Aufbaumaterial auf einem Träger, so dass eine Lage eines mit dem Träger verbundenen Aufbaumaterials erhalten wird, welche einem ersten ausgewählten Querschnitt des Vorläufers entspricht;
II) Abscheiden von radikalisch vernetztem Aufbaumaterial auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist;
   wobei das Abscheiden von radikalisch vernetztem Aufbaumaterial wenigstens in Schritt II) durch Belichten und/oder Bestrahlen eines ausgewählten Bereichs eines radikalisch vernetzbaren Aufbaumaterials, entsprechend dem jeweils ausgewählten Querschnitt des Vorläufers, erfolgt und wobei das radikalisch vernetzbare Aufbaumaterial eine Viskosität (23 °C, DIN EN ISO 2884-1) von ≥ 5 mPas bis ≤ 1000000 mPas aufweist,
   wobei das radikalisch vernetzbare Aufbaumaterial eine härtbare Komponente umfasst, in der NCO-Gruppen und olefinische C=C-Doppelbindungen vorliegen und nach Schritt III) weiterhin Schritt IV) durchgeführt wird:
IV) Erwärmen des nach Schritt III) erhaltenen Vorläufers auf eine Temperatur von ≥ 50 °C, so dass der Gegenstand erhalten wird.

In dieser Variante wird somit der Gegenstand mittels eines additiven Herstellungsverfahrens und in zwei Herstellungsabschnitten erhalten. Der erste Herstellungsabschnitt kann als Aufbauabschnitt angesehen werden. Dieser Aufbauabschnitt lässt sich mittels strahlenoptischer additiver Fertigungsverfahren wie dem Inkjet-Verfahren, der Stereolithographie oder dem DLP (digital light processing)-Verfahren realisieren und ist Gegenstand der Schritte I), II) und III). Der zweite Herstellungsabschnitt kann als Härtungsabschnitt angesehen werden und ist Gegenstand des Schritts IV). Hier wird der nach dem Aufbauabschnitt erhaltene Vorläufer oder intermediäre Gegenstand ohne seine Form weiter zu verändern in einen mechanisch dauerhafteren Gegenstand überführt.

In Schritt I) dieser Variante des Verfahrens erfolgt das Abscheiden eines radikalisch vernetzten Aufbaumaterials auf einem Träger. Dieses ist gewöhnlich der erste Schritt in Inkjet-, Stereolithographie- und DLP-Verfahren. Auf diese Weise wird eine Lage eines mit dem Träger verbundenen Aufbaumaterials erhalten, welche einem ersten ausgewählten Querschnitt des Vorläufers entspricht.

Gemäß der Anweisung von Schritt III) wird Schritt II) so lange wiederholt, bis der gewünschte Vorläufer gebildet ist. In Schritt II) erfolgt das Abscheiden eines radikalisch vernetzten Aufbaumaterials auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist. Bei der zuvor aufgetragenen Lage des Aufbaumaterials kann es sich um die erste Lage aus Schritt I) oder um eine Lage aus einer vorigen Durchlauf des Schritts II) handeln.

Es ist in dieser Verfahrensvariante vorgesehen, dass das Abscheiden eines radikalisch vernetzten Aufbaumaterials wenigstens in Schritt II) (vorzugsweise auch in Schritt I) durch Belichten und/oder Bestrahlen eines ausgewählten Bereichs eines radikalisch vernetzbaren Harzes, entsprechend dem jeweils ausgewählten Querschnitt des Gegenstandes, erfolgt. Dieses kann sowohl durch selektives Belichten (Stereolithographie, DLP) des vernetzbaren Aufbaumaterials als auch durch selektives Auftragen des vernetzbaren Aufbaumaterials, gefolgt von einem Belichtungsschritt, der aufgrund des vorigen selektiven Auftragens des vernetzbaren Aufbaumaterials nicht mehr selektiv sein muss (Inkjet-Verfahren).

Im Kontext dieser Erfindung werden die Begriffe "radikalisch vernetzbares Aufbaumaterial" und "radikalisch vernetztes Aufbaumaterial" benutzt. Hierbei wird das radikalisch vernetzbare Aufbaumaterial durch das Belichten und/oder Bestrahlen, welches radikalische Vernetzungsreaktionen auslöst, in das radikalisch vernetzte Aufbaumaterial überführt. Unter "Belichten" wird hierbei die Einwirkung von Licht im Bereich zwischen nahem IR- und nahem UV-Licht (1400 nm bis 315 nm Wellenlänge) verstanden. Die übrigen kürzeren Wellenlängenbereiche werden durch den Begriff "Bestrahlen" abgedeckt, zum Beispiel fernes UV-Licht, Röntgenstrahlung, Gammastrahlung und auch Elektronenstrahlung.

Das Auswählen des jeweiligen Querschnitts erfolgt zweckmäßigerweise durch ein CAD-Programm, mit dem ein Modell des herzustellenden Gegenstandes erzeugt wurde. Diese Operation wird auch "Slicing" genannt, und dient als Grundlage für die Steuerung der Belichtung und/oder Bestrahlung des radikalisch vernetzbaren Harzes.

Das radikalisch vernetzbare Aufbaumaterial weist in dieser Verfahrensvariante eine Viskosität (23 °C, DIN EN ISO 2884-1) von ≥ 5 mPas bis ≤ 1000000 mPas auf. Somit ist es zumindest für die Zwecke der additiven Fertigung als flüssiges Harz anzusehen. Vorzugsweise beträgt die Viskosität ≥ 50 mPas bis ≤ 100000 mPas, mehr bevorzugt ≥ 500 mPas bis ≤ 50000 mPas.

Weiterhin umfasst in dem Verfahren das radikalisch vernetzbare Harz eine härtbare Komponente, in der NCO-Gruppen und olefinische C=C-Doppelbindungen vorliegen. In dieser härtbaren Komponente kann das molare Verhältnis von NCO-Gruppen und olefinischen C=C-Doppelbindungen in einem Bereich von ≥ 1:5 bis ≤ 5:1 (bevorzugt ≥ 1:4 bis ≤ 4:1, mehr bevorzugt ≥ 1:3 bis ≤ 3:1) liegen. Das molekulare Verhältnis dieser funktionellen Gruppen lässt sich durch die Integration der Signale einer Probe im ¹³C-NMR-Spektrum ermitteln.

Neben der härtbaren Komponente kann das radikalisch vernetzbare Aufbaumaterial auch eine nicht härtbare Komponente umfassen, in der beispielsweise Stabilisatoren, Füllstoffe und dergleichen zusammengefasst sind. In der härtbaren Komponente können die NCO-Gruppen und die olefinischen C=C-Doppelbindungen in getrennten Molekülen und/oder in einem gemeinsamen Molekül vorliegen. Wenn NCO-Gruppen und olefinische C=C-Doppelbindungen in getrennten Molekülen vorliegen, kann der nach Schritt IV) dieser Verfahrensvariante erhaltene Körper ein interpenetrierendes Polymer-Netzwerk aufweisen

In dieser Variante des Verfahrens wird weiterhin nach Schritt III) weiterhin Schritt IV) durchgeführt. In diesem Schritt erfolgt das Erwärmen des nach Schritt III) erhaltenen Vorläufers auf eine Temperatur von ≥ 50 °C, vorzugsweise ≥ 65 °C, mehr bevorzugt ≥ 80 °C, besonders bevorzugt ≥ 80 °C bis ≤ 200 °C, so dass der Gegenstand erhalten wird. Das Erwärmen kann für eine Zeitspanne von ≥ 1 Minute, bevorzugt ≥ 5 Minuten, mehr bevorzugt ≥ 10 Minuten bis ≤ 24 Stunden bevorzugt ≤ 8 Stunden, besonders bevorzugt < 4 Stunden, erfolgen.

Vorzugsweise wird die Reaktion durchgeführt, bis ≤ 30%, bevorzugt ≤ 20% und mehr bevorzugt ≤ 15% der ursprünglich vorhandenen NCO-Gruppen noch vorhanden sind. Dieses lässt sich mittels quantitativer IR-Spektroskopie bestimmen.

Es ist bevorzugt, dass Schritt IV) erst dann durchgeführt wird, wenn das gesamte Aufbaumaterial des Vorläufers seinen Gelpunkt erreicht hat. Der Gelpunkt wird als erreicht angesehen, wenn in einer dynamisch-mechanischen Analyse (DMA) mit einem Platte/Platte-Oszillationsviskosimeter gemäß ISO 6721-10 bei 20 °C sich die Graphen des Speichermoduls G' und des Verlustmoduls G" kreuzen. Gegebenenfalls wird der Vorläufer weiterer Belichtung und/oder Bestrahlung zur Vervollständigung der radikalischen Vernetzung ausgesetzt. Das radikalisch vernetzte Aufbaumaterial kann ein Speichermodul G' (DMA, Platte/Platte-Oszillationsviskosimeter gemäß ISO 6721-10 bei 20 °C und einer Scherrate von 1/s) von ≥ 10⁶ Pa aufweisen.

In einer weiteren bevorzugten Ausführungsform weist das Verfahren die Merkmale auf:
- der Träger ist innerhalb eines Behälters angeordnet und ist vertikal in Schwerkraftrichtung absenkbar,
- der Behälter enthält das radikalisch vernetzbare Aufbaumaterial in einer Menge, welche ausreicht, um wenigstens den Träger und eine in vertikaler Richtung gesehenen obersten Oberfläche von auf dem Träger abgeschiedenem vernetztem Aufbaumaterial zu bedecken,

- vor jedem Schritt II) wird der Träger um eine vorbestimmte Strecke abgesenkt, so dass über der in vertikaler Richtung gesehen obersten Lage des vernetzten Aufbaumaterials sich eine Schicht des radikalisch vernetzbaren Aufbaumaterials bildet und
- in Schritt II) belichtet und/oder bestrahlt ein Energiestrahl den ausgewählten Bereich der Schicht des radikalisch vernetzbaren Aufbaumaterials, entsprechend dem jeweils ausgewählten Querschnitt des Vorläufers.

Somit wird gemäß dieser Ausfuhrungsform das additive Fertigungsverfahren der Stereolithographie (SLA) abgedeckt. Der Träger kann beispielsweise jeweils um eine vorbestimmte Strecke von ≥ 1 µm bis ≤ 2000 µm abgesenkt werden.

In einer weiteren bevorzugten Ausführungsform weist das Verfahren die Merkmale auf:
- der Träger ist innerhalb eines Behälters angeordnet ist und vertikal entgegen der Schwerkraftrichtung anhebbar,
- der Behälter stellt das radikalisch vernetzbare Aufbaumaterial bereit,
- vor jedem Schritt II) wird der Träger um eine vorbestimmte Strecke angehoben, so dass unter der in vertikaler Richtung gesehen untersten Lage des vernetzten Aufbaumaterials sich eine Schicht des radikalisch vernetzbaren Aufbaumaterials bildet und
- in Schritt II) belichtet und/oder bestrahlt eine Mehrzahl von Energiestrahlen den ausgewählten Bereich der Schicht des radikalisch vernetzbaren Aufbaumaterials, entsprechend dem jeweils ausgewählten Querschnitt des Vorläufers, gleichzeitig.

Somit wird gemäß dieser Ausführungsform das additive Fertigungsverfahren der DLP-Technologie abgedeckt, wenn die Mehrzahl von Energiestrahlen über ein Array von einzeln ansteuerbaren Mikrospiegeln das per Belichtung und/oder Bestrahlung bereitzustellende Bild erzeugen. Der Träger kann beispielsweise jeweils um eine vorbestimmte Strecke von ≥ 1 µm bis ≤ 2000 µm angehoben werden.

In einer weiteren bevorzugten Ausführungsform weist das Verfahren die Merkmale auf:
- in Schritt II) wird das radikalisch vernetzbare Aufbaumaterial aus einem oder mehreren Druckköpfen, entsprechend dem jeweils ausgewählten Querschnitt des Vorläufers, aufgetragen und wird anschließend belichtet und/oder bestrahlt.

Somit wird gemäß dieser Ausführungsform das additive Fertigungsverfahren der Inkjet-Methode abgedeckt: es wird das vernetzbare Aufbaumaterial gegebenenfalls separat von den erfindungsgemäßen Katalysatoren selektiv durch einen oder mehrere Druckköpfe aufgetragen und die anschließende Härtung durch Bestrahlen und/oder Belichtung kann unselektiv sein, beispielsweise durch eine UV-Lampe. Bei dem oder den Druckköpfen zum Auftragen des vernetzbaren Aufbaumaterials kann es sich um einen (modifizierten) Druckkopf für Tintenstrahldruckverfahren handeln. Der Träger kann vom Druckkopf weg bewegbar ausgestaltet sein oder der Druckkopf kann vom Träger weg bewegbar ausgestaltet sein. Die Inkremente der Abstandsbewegungen zwischen Träger und Druckkopf können beispielsweise in einem Bereich von ≥ 1µm bis ≤ 2000 µm liegen.

In einer weiteren bevorzugten Ausführungsform ist der Gegenstand eine Beschichtung und das Verfahren umfasst die Schritte:
- Auftragen des Aufbaumaterials auf ein Substrat
- Einwirken von Wärme und/oder UV-Strahlung auf das aufgetragene Aufbaumaterial, so dass im aufgetragenen Aufbaumaterial eine zumindest teilweise Vernetzung der radikalisch vernetzbaren Gruppen erfolgt
- Erwärmen des aufgetragenen Aufbaumaterials auf eine Temperatur von ≥ 50 °C, so dass im aufgetragenen Aufbaumaterial zumindest teilweise eine Reaktion zwischen NCO-Gruppen und Gruppen mit Zerewitinoff-aktiven H-Atomen erfolgt.

Das Einwirken von Wärme kann zum Beispiel zum thermischen Zerfall von Peroxid-basierten Radikalstartern führen. Das Einwirken von UV-Strahlung erfolgt mittels UV-Licht (1400 nm bis 315 nm Wellenlänge) und aktiviert photochemische Radikalstarter. In einem weiterem Schritt wird der latente Sn-Urethanisierungskatalysator aktiviert, um den zweiten Härtungsmechanismus ablaufen zu lassen.

In einer weiteren bevorzugten Ausführungsform ist der Gegenstand eine Klebeverbindung und das Verfahren umfasst die Schritte:
- Auftragen des Aufbaumaterials auf ein erstes Substrat
- Kontaktieren des aufgetragenen Aufbaumaterials mit einem zweiten Substrat
- Einwirken von Wärme und/oder UV-Strahlung auf das aufgetragene Aufbaumaterial, so dass im aufgetragenen Aufbaumaterial eine zumindest teilweise Vernetzung der radikalisch vernetzbaren Gruppen erfolgt
- Erwärmen des aufgetragenen Aufbaumaterials auf eine Temperatur von ≥ 50 °C, so dass im aufgetragenen Aufbaumaterial zumindest teilweise eine Reaktion zwischen NCO-Gruppen und Gruppen mit Zerewitinoff-aktiven H-Atomen erfolgt.

Das Einwirken von Wärme kann zum Beispiel zum thermischen Zerfall von Peroxid-basierten Radikalstartern führen. Das Einwirken von UV-Strahlung erfolgt mittels UV-Licht (1400 nm bis 315 nm Wellenlänge) und aktiviert photochemische Radikalstarter. In einem weiterem Schritt wird der latente Sn-Urethanisierungskatalysator aktiviert, um den zweiten Härtungsmechanismus ablaufen zu lassen.

In einer weiteren bevorzugten Ausführungsform umfasst das Aufbaumaterial weiterhin einen Radikalstarter und/oder einen Isocyanat-Trimerisierungskatalysator. Um eine unerwünschte Erhöhung der Viskosität des radikalisch vernetzbaren Aufbaumaterials zu verhindern, können Radikalstarter und/oder Isocyanat-Trimerisierungskatalysator erst unmittelbar vor Beginn des erfindungsgemäßen Verfahrens dem Aufbaumaterial hinzugefügt werden.

Als Radikalstarter kommen thermische und/oder photochemische Radikalstarter (Photoinitiatoren) in Betracht. Es ist auch möglich, dass gleichzeitig thermische und photochemische Radikalstarter eingesetzt werden. Geeignete thermische Radikalstarter sind beispielsweise (AIBN), Dibenzoylperoxid (DBPO), Di-tert-butylperoxid, Dicumylperoxid und/oder anorganische Peroxide wie Peroxodisulfate.

Bei den Photoinitiatoren wird prinzipiell zwischen zwei Typen unterschieden, dem unimolekularen Typ (I) und dem bimolekularen Typ (II). Geeignete Typ (I)-Systeme sind aromatische Ketonverbindungen, wie z. B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind Typ (II)-Initiatoren wie Benzoin und seine Derivate, Benzilketale, Acylphosphinoxide, 2,4,6-Trimethylbenzoyldiphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Spezielle Beispiele sind Irgacur®500 (eine Mischung von Benzophenon und (1-Hydroxycyclohexyl)phenylketon, Fa. Ciba, Lampertheim, DE), Irgacure®819 DW (Phenylbis-(2, 4, 6-trimethylbenzoyl)phosphinoxid, Fa. Ciba, Lampertheim, DE) oder Esacure® KIP EM (Oligo-[2-hydroxy-2-methyl-1-[4-(1-methylvinyl)-phenyl]-propanone], Fa. Lamberti, Aldizzate, Italien) und Bis-(4-methoxybenzoyl)diethylgerman. Es können auch Gemische dieser Verbindungen eingesetzt werden.

Bei den Photoinitiatoren sollte darauf geachtet werden, dass sie eine ausreichende Reaktivität gegenüber der verwendeten Strahlenquelle haben. Es ist eine Vielzahl von Photoinitiatoren auf dem Markt bekannt. Durch kommerziell verfügbare Photoinitiatoren wird der Wellenlängenbereich im gesamten UV-VIS Spektrum abgedeckt. Photoinitiatoren finden Einsatz bei der Herstellung von Lacken, Druckfarben und Klebstoffen sowie im Dentalbereich.

In dieser Verfahrensvariante kommt der Photoinitiator im Allgemeinen in einer auf die Menge der eingesetzten härtbaren olefinisch ungesättigte Doppelbindungen tragenden Komponente bezogenen Konzentration von 0,01 bis 6,0 Gew.-%, bevorzugt von 0,05 bis 4,0 Gew.-% und besonders bevorzugt von 0,1 bis 3,0 Gew.-% zum Einsatz.

In einer weiteren bevorzugten Ausführungsform wird das Aufbaumaterial aus der Vermischung einer NCO-Gruppen enthaltenden Komponente sowie einer Gruppen mit Zerewitinoff-aktiven H-Atomen enthaltenden Komponente erhalten und die Vermischung erfolgt ≤ 5 Minuten vor Beginn des Verfahrens. In Verfahren wie DLP-Verfahren ist es ferner bevorzugt, dass die Mischung des Aufbaumaterials kontinuierlich erzeugt wird und dem Aufbauprozess zugeführt wird. Um unerwünschte Nebenreaktionen zu vermeiden können die übrigen Bestandteile des Aufbaumaterials in der Zerewitinoff-aktive H-Atomen enthaltenden Komponente vorliegen.

In einer weiteren bevorzugten Ausführungsform ist in der Definition gemäß den vorstehenden Ausführungen D -N(R1)- und R1 ist Wasserstoff oder ein Alkyl-, Aralkyl-, Alkaryl- oder Arylrest mit bis zu 20 C-Atomen ist oder der Rest

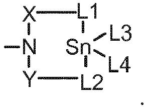

In einer weiteren bevorzugten Ausführungsform ist in der Definition gemäß den vorstehenden Ausführungen R1 Wasserstoff oder ein Methyl-, Ethyl-, Propyl-, Butyl-, Hexyl-, Octyl-, Ph-, oder CH₃Ph-Rest oder der Rest 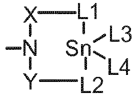 und Propyl-, Butyl-, Hexyl-, und Octyl stehen für alle isomeren Propyl-, Butyl-, Hexyl- sowie Octylreste.

In einer weiteren bevorzugten Ausführungsform ist in der Definition gemäß den vorstehenden Ausführungen D* -O-.

Weitere bevorzugte Merkmale für die Zinnverbindungen gemäß den vorstehenden Ausführungen werden nachfolgend aufgeführt:
Bevorzugt handelt es sich bei X, Y und Z um die Alkylenreste -C(R2)(R3), -C(R2)(R3)-C(R4)(R5)- oder den ortho-Arylenrest

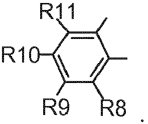

Bevorzugt handelt es sich bei R2 bis R7 um Wasserstoff oder Alkyl-, Aralkyl-, Alkaryl- oder Arylreste mit bis zu 20 C-Atomen, besonders bevorzugt um Wasserstoff oder Alkyl-, Aralkyl-, Alkaryl- oder Arylreste mit bis zu 8 C-Atomen, ganz besonders bevorzugt um Wasserstoff oder Alkylreste mit bis zu 8 C-Atomen, noch weiter bevorzugt um Wasserstoff oder Methyl.

Bevorzugt handelt es sich bei R8 bis R11 um Wasserstoff oder Alkylreste mit bis zu 8 C-Atomen, besonders bevorzugt um Wasserstoff oder Methyl.

Bevorzugt handelt es sich bei L1, L2 und L5 um -NR12-, -S-, -SC(=S)-, -SC(=O)-, -OC(=S)-, -O-, oder -OC(=O)-, besonders bevorzugt um -O-, oder -OC(=O)-.

Bevorzugt handelt es sich bei R12 um Wasserstoff oder einen Alkyl-, Aralkyl-, Alkaryl- oder Arylrest mit bis zu 20 C-Atomen, besonders bevorzugt um Wasserstoff oder einen Alkyl-, Aralkyl-, Alkaryl- oder Arylrest mit bis zu 12 C-Atomen, ganz besonders bevorzugt um Wasserstoff oder einen Methyl-, Ethyl-, Propyl-, Butyl-, Hexyl-oder Octyl-Rest, wobei Propyl-, Butyl-, Hexyl-, und Octyl für alle isomeren Propyl-, Butyl-, Hexyl- sowie Octylreste stehen.

Bevorzugt handelt es sich bei L3 und L4 um -Hal, -OH, -SH, -OR13, -OC(=O)R14, wobei die Reste R13 und R14 bis zu 20 Kohlenstoffatome, bevorzugt bis zu 12 Kohlenstoffatome aufweisen.

Besonders bevorzugt handelt es sich bei L3 und L4 um Cl-, MeO-, EtO-, PrO-, BuO-, HexO-, OctO-, PhO-, Formiat, Acetat, Propanoat, Butanoat, Pentanoat, Hexanoat, Octanoat, Laurat, Lactat oder Benzoat, wobei Pr, Bu, Hex und Oct für alle isomeren Propyl-, Butyl-, Hexyl- sowie Octylreste stehen, noch weiter bevorzugt um Cl-, MeO-, EtO-, PrO-, BuO-, HexO-, OctO-, PhO-, Hexanoat, Laurat, oder Benzoat, wobei Pr, Bu, Hex und Oct für alle isomeren Propyl-, Butyl-, Hexyl- sowie Octylreste stehen.

Bevorzugt handelt es sich bei R15 bis R20 um Wasserstoff oder Alkyl-, Aralkyl-, Alkaryl- oder Arylreste mit bis zu 20 C-Atomen, besonders bevorzugt um Wasserstoff oder Alkyl-, Aralkyl-, Alkaryl- oder Arylreste mit bis zu 12 C-Atomen, ganz besonders bevorzugt um Wasserstoff, Methyl-, Ethyl-, Propyl-, Butyl-, Hexyl-, oder Octyl-Reste, wobei Propyl-, Butyl-, Hexyl-, und Octyl für alle isomeren Propyl-, Butyl-, Hexyl- sowie Octylreste stehen.

Die Einheiten Ll-X, L2-Y und L5-Z stehen bevorzugt für -CH₂CH₂O-, -CH₂CH(Me)O-, -CH(Me)CH₂O-, -CH₂C(Me)₂O-, -C(Me)₂ CH₂O- oder -CH₂C(=O)O-.

Die Einheit L1-X-D-Y-L2 steht bevorzugt für: HN[CH₂CH₂O-]₂, HN[CH₂CH(Me)O-]₂, HN[CH₂CH(Me)O-][CH(Me)CH₂O-], HN[CH₂C(Me)₂O-]₂, HN[CH₂C(Me)₂O-][C(Me)₂CH₂O-], HN[CH₂C(=O)O-]₂, MeN[CH₂CH₂O-]₂, MeN[CH₂CH(Me)O-]₂, MeN[CH₂CH(Me)O-] [CH(Me)CH₂O-], MeN[CH₂C(Me)₂O-]₂, MeN[CH₂C(Me)₂O-][C(Me)₂CH₂O-], MeN[CH₂C(=O)O-]₂, EtN[CH₂CH₂O-]₂, EtN[CH₂CH(Me)O-]₂, EtN[CH₂CH(Me)O-][CH(Me)CH₂O-], EtN[CH₂C(Me)₂O-]₂, EtN[CH₂C(Me)₂O-][C(Me)₂CH₂O-], EtN[CH₂C(=O)O-]₂, PrN[CH₂CH₂O-]₂, PrN[CH₂CH(Me)O-]₂, PrN[CH₂CH(Me)O-][CH(Me)CH₂O-], PrN[CH₂C(Me)₂O-]₂, PrN[CH₂C(Me)₂O-][C(Me)₂CH₂O-], PrN[CH₂C(=O)O-]₂, BuN[CH₂CH₂O-]₂, BuN[CH₂CH(Me)O-]₂, BuN[CH₂CH(Me)O-] [CH(Me)CH₂O-], BuN[CH₂C(Me)₂O-]₂, BuN[CH₂C(Me)₂O-][C(Me)₂CH₂O-], BuN[CH₂C(=O)O-]₂, HexN[CH₂CH₂O-]₂, HexN[CH₂CH(Me)O-]₂, HexN[CH₂CH(Me)O-] [CH(Me)CH₂O-], HexN[CH₂C(Me)₂O-]₂, HexN[CH₂C(Me)₂O-][C(Me)₂CH₂O-], HexN[CH₂C(=O)O-]₂, OctN[CH₂CH₂O-]₂, OctN[CH₂CH(Me)O-]₂, OctN[CH₂CH(Me)O-][CH(Me)CH₂O-], OctN[CH₂C(Me)₂O-]₂, OctN[CH₂C(Me)₂O-][C(Me)₂CH₂O-], OctN[CH₂C(=O)O-]₂, wobei Pr, Bu, Hex und Oct für alle isomeren Propyl-, Butyl- sowie Octylreste stehen können, PhN[CH₂CH₂O-]₂, PhN[CH₂CH(Me)O-]₂, PhN[CH₂CH(Me)O-][CH(Me)CH₂O-],PhN[CH₂C(Me)₂O-]₂,PhN[CH₂C(Me)₂O-][C(Me)₂CH₂O-], PhN[CH₂C(=O)O-]₂, 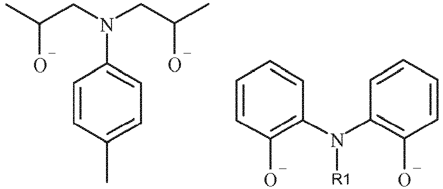 oder

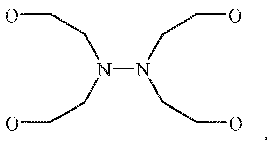

Die Zinnverbindungen - wie dem Fachmann bekannt ist - neigen zur Oligomerisierung, so dass häufig mehrkernige Zinnverbindungen oder Gemische aus ein- und mehrkernigen Zinnverbindungen vorliegen. In den mehrkernigen Zinnverbindungen sind die Zinnatome bevorzugt über Sauerstoffatome (,Sauerstoffbrücken', *vide intra*) miteinander verbunden. Typische oligomere Komplexe (mehrkernige Zinnverbindungen) entstehen z.B. durch Kondensation der Zinnatome über Sauerstoff oder Schwefel, z.B. 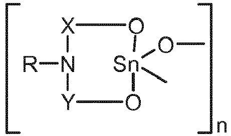 mit n > 1(vgl. Formel F-II). Bei niedrigen Oligomerisierungsgraden findet man häufig cyclische, bei höheren Oligomerisierungsgraden lineare Oligomere mit OH- bzw. SH-Endgruppen (vgl. Formel F-III).

In einer weiteren bevorzugten Ausführungsform ist die zyklische Zinnverbindung ausgewählt aus der Gruppe mono- oder polyzyklischer Zinnverbindungen vom Typ:
1,1-Di-"R"-5-"organyl"-5-aza-2,8-dioxa-1-stanna-cyclooctane,
1,1-Di-"R"-5-(N-"organyl")aza-3,7-di-"organyl"-2,8-dioxa-1-stanna-cyclooctane,
1,1-Di-"R"-5-(N-"organyl")aza-3,3,7,7-tetra-"organyl"-2,8-dioxa-1-stanna-cyclooctane,
4,12-Di-"organyl"-1,7,9,15-tetraoxa-4,12-diaza-8-stannaspiro[7.7]pentadecan,
4,12-Di-"organyl"-2,6,10,14-tetra-"organyl"-1,7,9,15-tetraoxa-4,12-diaza-8-stannaspiro [7.7]pentadecan,
4,12-Di-"organyl"-2,2,6,6,10,10,14,14-octa-"organyl"-1,7,9,15-tetraoxa-4,12-diaza-8-stannaspiro [7.7]pentadecan,
wobei "R" für D*, L3 oder L4, wie oben definiert, steht und "organyl" für R1, wie oben definiert, steht.

In einer weiteren bevorzugten Ausführungsform werden als zyklische Zinnverbindung eine oder mehrere der nachfolgenden Verbindungen eingesetzt:
4,12-Di-n-butyl-1,7,9,15-tetraoxa-4,12-diaza-8-stannaspiro[7.7]pentadecan,
4,12-Di-n-butyl-2,6,10,14-tetramethyl-1,7,9,15-tetraoxa-4,12-diaza-8-stannaspiro [7.7]pentadecan,
2,4,6,10,12,14-Hexamethyl-1,7,9,15-tetraoxa-4,12-diaza-8-stannaspiro[7.7]pentadecan,
4,12-Di-n-octyl-2,6,10,14-tetramethyl-1,7,9,15 -tetraoxa-4,12-diaza-8-stannaspiro[7.7]pentadecan,
4,12-Di-n-octyl-1,7,9,15-tetraoxa-4,12-diaza-8-stannaspiro[7.7]pentadecan,
4,12-Dimethyl-1,7,9,15-tetraoxa-4,12-diaza-8-stannaspiro[7.7]pentadecan,
1,1-Dichloro-5-methyl-5-aza-2,8-dioxa-1-stannacyclooctan,
1,1-Diisopropyl-5-methyl-5-aza-2,8-dioxa-1-stannacyclooctan,
1,1-Dibenzoyl-3,3,7,7-tetramethyl 5-n-o ctyl-5-aza-2,8-dioxa-1-stannacyclooctan,
1,1-Dibenzoyl- 5-n-octyl-5-aza-2,8-dioxa-1-stannacyclooctan,
1,1-Bis(p-dodecylphenylsulfonyl)- 5-n-octyl-5-aza-2,8-dioxa-1-stannacyclooctan,
2-Benzoyloxy-6-octyl-4,8-dioxo-1,3 ,6,2-dioxazastannocan-2-ylbenzoat
oder Mischungen davon.

Weiterhin bevorzugt werden als zyklische Zinnverbindungen mindestens eine oder eine Mischung aus mindestens zwei der nachfolgenden Verbindungen eingesetzt:
4,12-Bis(cyclopentyl)-1,7,9,15-tetraoxa-4,12-diaza-8-stannaspirol[7.7]pentadecan,
4,12-Bis(cyclohexyl)-1,7,9,15 -tetraoxa-4,12-diaza-8-stannaspirol[7.7]pentadecan,
4,12-Bis(cyclopentyl)-2,6,10,14-tetramethyl-1,7,9,15-tetraoxa-4,12-diaza-8-stannaspirol[7.7]pentadecan,
4,12-Bis(cyclohexyl)-2,6,10,14-tetramethyl-1,7,9,15 -tetraoxa-4,12-diaza-8-stannaspirol[7.7]pentadecan,
4,12-dibutyl-2,6,10,14-tetramethyl-1,7,9,15 -tetraoxa-4,12-diaza-8-stannaspirol [7.7]pentadecan.

Das Aufbaumaterial im erfindungsgemäßen Verfahren kann beispielsweise die folgende Zusammensetzung haben, wobei alle Zahlenangaben in Gewichts-% sind und sich die Angaben in Gewichts-% zu ≤ 100 Gewichts-% addieren:

| | |
|---|---|
| NCO-funktionelles Urethanacrylat | 20 - 30 |
| Acrylat | 35 - 45 |
| Polyol | 30 - 40 |
| Photoinitiator 1 | 0,1 - 0,3 |
| Photoinitiator 2 | 0,1 - 0,3 |
| UV-Inhibitor | 0,01-0,3 |
| Sn-Kat | 0,01 - 0,2 |

Im Speziellen:

| | |
|---|---|
| NCO-funktionelles Urethanacrylat | 25,4 |
| Acrylat | 39,5 |
| Polyol | 34,3 |
| Photoinitiator 1 | 0,22 |
| Photoinitiator 2 | 0,22 |
| UV-Inhibitor | 0,2 |
| Sn-Kat | 0,034 - 0,102 |

NCO-funktionelles Urethanacrylat: beispielsweise ein Urethanacrylat, welches aus der Umsetzung von trimerem HDI-Isocyanurat mit Hydroxypropylacrylat bei einer NCO-Kennzahl von 200 durch Rühren bei 60 °C, bis alle OH Gruppen umgesetzt sind, erhalten werden kann.
Acrylat: beispielsweise Isobornylacrylat
Polyol: beispielsweise ein Polyetherpolyol wie Polytetramethylenetherglycol mit einer Molekülmasse von 1000 g/mol (PolyTHF 1000)
Photoinitiator 1: Acylphosphinoxid, beispielsweise Ethyl(2,4,6-trimethylbenzoyl)phenylphosphinat (TPOL)
Photoinitiator 2: Germanium-basierter Photoinitiator wie beispielsweise Bis-4-(methoxybenzoyl)diethy lgerman
UV-Inhibitor: beispielsweise Mayzo OB+ (2,2'-(2,5-thiophendiyl)bis(5-tertbutylbenzoxazol))
Sn-Kat: zyklische Zinnverbindung der Formel F-I, F-II oder F-III

Ein weiterer Gegenstand der vorliegenden Erfindung ist ein Gegenstand, erhalten durch ein erfindungsgemäßes Verfahren, wobei der Gegenstand in Aufbaurichtung seines Herstellungsverfahrens wenigstens abschnittsweise eine Höhe von ≥ 1mm, vorzugsweise ≥ 5 mm, aufweist.

Die Erfindung betrifft ebenfalls die Verwendung von zyklischen Zinnverbindungen der Formel F-I, F-II und/oder F-III, wie in den vorstehenden Ausführungen definiert, als thermisch latente Urethanisierungskatalysatoren in Aufbaumaterialien für additive Fertigungsverfahren.

### Experimenteller Teil

Die Erfindung wird anhand der nachfolgenden Beispiele näher erläutert, ohne jedoch darauf beschränkt zu sein.

Es wurden die in der Tabelle 1 angegebenen Formulierungen von Aufbaumaterialien enthaltend radikalisch vernetzbare Gruppen, NCO-Gruppen sowie Gruppen mit Zerewitinoff-aktiven H-Atomen hergestellt. Die Angaben in der Tabelle 1beziehen sich auf Gewichtsteile.

### Erfindungsgemäßes Beispiel 1:

Aufbaumaterial enthaltend *Desmodur*® *N3390 BA,* Hydroxyethylacrylat und 4,12-Bis(cyclopentyl)-1,7,9,15-tetraoxa-4,12-diaza-8-stannaspirol[7.7]pentadecan (Polyisocyanat mit thermolatentem Katalysator)

### Erfindungsgemäßes Beispiel 2:

Aufbaumaterial enthaltend *Desmodur*® *N3390 BA,* Hydroxyethylacrylat und 4,12-Bis(cyclohexyl)-1,7,9,15-tetraoxa-4,12-diaza-8-stannaspirol[7.7]pentadecan (Polyisocyanat mit thermolatentem Katalysator)

### Erfindungsgemäßes Beispiel 3:

Aufbaumaterial enthaltend *Desmodur*® *N3390 BA,* Hydroxyethylacrylat und 4,12-Bis(cyclopentyl)-2,6,10,14-tetramethyl-1,7,9,15-tetraoxa-4,12-diaza-8-stannaspirol[7.7]pentadecan (Polyisocyanat mit thermolatentem Katalysator)

### Erfindungsgemäßes Beispiel 4:

Aufbaumaterial enthaltend *Desmodur*® *N3390 BA,* Hydroxyethylacrylat und 4,12-Bis(cyclohexyl)-2,6,10,14-tetramethyl-1,7,9,15-tetraoxa-4,12-diaza-8-stannaspirol[7.7]pentadecan (Polyisocyanat mit thermolatentem Katalysator)

### Erfindungsgemäßes Beispiel 5:

Aufbaumaterial enthaltend *Desmodur*® *N3390 BA,* Hydroxyethylacrylat und 4,12-dibutyl-2,6,10,14-tetramethyl-1,7,9,15-tetraoxa-4,12-diaza-8-stannaspirol[7.7]pentadecan (Polyisocyanat mit thermolatentem Katalysator)

### Vergleichsbeispiel VB 6:

Aufbaumaterial enthaltend *Desmodur*® *N 3390 BA,* Hydroxyethylacrylat und Dibutylzinndilaurat (DBTL) 400 ppm

### Vergleichsbeispiel VB 7:

Aufbaumaterial enthaltend *Desmodur*® *N 3390 BA,* Hydroxyethylacrylat und Dibutylzinndilaurat (DBTL) 40 ppm

### Vergleichsbeispiel VB 8:

Aufbaumaterial enthaltend *Desmodur*® *N 3390 BA,* Hydroxyethylacrylat ohne Katalysator

*Desmodur*® *N 3390 BA* ist ein Handelsprodukte der Covestro AG. Die Kenndaten des *Desmodur*® *N 3390 BA* entsprechen der Angaben auf dem gleichnamigen Datenblatt gemäß der Ausgabe 2017-06-01. Es handelt sich dabei um ein aliphatisches Polyisocyanat (HDI-Trimerisat) ca. 90 Gew.- %ig in n-Butylacetat, das unter anderem als Härterkomponente für lichtechte Polyurethan-Lacksysteme verwendet wird. Der NCO-Gehalt beträgt ca. 19,6 Gew.-% (bestimmt gemäß DIN EN ISO 11 909), die Viskosität bei 23 °C 500 +/- 150 mPa·s (bestimmt gemäß DIN EN ISO 3219/A.3).

**Tabelle 1: Zusammensetzung der Aufbaumaterialien**

| **Beispiel** | **1** | **2** | **3** | **4** | **5** | **VB 6** | **VB 7** | **VB 8** |
|---|---|---|---|---|---|---|---|---|
| Einsatzstoff | Gewichtsteile [%] | | | | | | | |
| Desmodur® N 3390 | 62,93 | 62,92 | 62,91 | 62,90 | 62,92 | 63,06 | 63,096 | 63,10 |
| 4,12- Bis(cyclopentyl)-1,7,9,15-tetraoxa-4,12-diaza-8-stannaspirol[7.7]pentadecan | 0,17 | - | - | - | - | - | - | - |
| 4, 12-Bis(cyclohexyl)-1,7,9,15-tetraoxa-4,12-diaza-8-stannaspirol[7.7]pentadecan | - | 0,18 | - | - | - | - | - | - |
| 4,12-Bis(cyclopentyl)-2,6,10,14-tetramethyl-1,7,9,15-tetraoxa-4,12-diaza-8-stannaspirol[7.7]pentadecan | - | - | 0,19 | - | - | - | - | - |
| 4, 12-Bis(cyclohexyl)-2,6, 10, 14-tetramethyl-1,7,9,15-tetraoxa-4,12-diaza-8-stannaspirol[7.7]pentadecan | - | - | - | 0,20 | - | - | - | - |
| 4, 12-dibutyl-2,6,10, 14-tetramethyl-1,7,9,15-tetraoxa-4,12-diaza-8-stannaspirol[7.7]pentadecan | - | - | - | - | 0,18 | - | - | - |
| Dibutylzinndilaurat (DBTL) | - | - | - | - | - | 0,04 | 0,004 | - |
| Hydroxyethylacrylat | 34,00 | 34,00 | 34,00 | 34,00 | 34,00 | 34,00 | 34,00 | 34,00 |
| 2-Hydroxy-2-methyl-1 - phenyl-propan-1-one | 2,90 | 2,90 | 2,90 | 2,90 | 2,90 | 2,90 | 2,90 | 2,90 |

### Formulierung der Aufbaumaterialien:

In einem Kunststoffbecher mit Deckel wurden die Komponenten in der Reihenfolge Isocyanat (Desmodur® N 3390 BA), Katalysator (falls verwendet), Hydroxyacrylat und der Photoinitiator (2-Hydroxy-2-methyl-1-phenyl-propan-1-one *Omnirad*® *1173* von *IGM Resins)* eingewogen. Diese Einsatzstoffe wurden in einem Planetenkreiselmischer *Thinky ARE250* bei Raumtemperatur für ca. 2 Minuten bei einer Umdrehungszahl von 2000 Umdrehungen pro Minute vermischt. In allen Formulierungen lag ein stöchiometrisches Verhältnis NCO- zu OH-Gruppen von ca. 1:1 vor.

### Viskositätsmessung über die Reaktionszeit:

Unmittelbar, also innerhalb von 2 Minuten nach dem 2 minütigen Mischen, erfolgte die erste Viskositätsmessung. Nachfolgend wurden in zeitlichen Abständen weitere Viskositätsmessungen durchgeführt, wie in Tabelle 2 dargestellt. Alle Viskositätsmessungen, die in Tabelle 2 angegeben werden wurden mit einem Viskosimeter der Fa. *Anton Paar MCR 51* mit Kegel-Platte Messsystem *CP25-2* bei 23 °C durchgeführt.

**Tabelle 2: Viskosität bei 23°C nach unterschiedlichen Reaktionszeiten**

| **Beispiel** | **1** | **2** | **3** | **4** | **5** | **VB 6** | **VB 7** | **VB 8** |
|---|---|---|---|---|---|---|---|---|
| Zeit | Viskosität | | | | | | | |
| [Minuten] | [mPas] | | | | | | | |
| 0 | 70 | 70 | 77 | 85 | 78 | 63.500 | 55 | 67 |
| 15 | n.b.* | n.b. | n.b. | n.b. | 93 | 70.600 | 66 | 150 |
| 30 | 62 | 88 | 80 | 107 | 102 | polymerisiert | 330 | 66 |
| 60 | 106 | 106 | 113 | 146 | 139 | - | 1.700 | 66 |
| 120 | 148 | 146 | 159 | 221 | 222 | - | 5.700 | 67 |
| 240 | 323 | 304 | 327 | 563 | 559 | - | 15.000 | 67 |
| 1.440 | 30100 | 29100 | 43400 | 63000 | 70.000 | - | polymerisiert | 116 |

| | | | | | | | | |
|---|---|---|---|---|---|---|---|---|
| *) n.b.: nicht bestimmt | | | | | | | | |

Die erfindungsgemäßen Beispiel 1 bis 5 zeigten eine Verdoppelung der Anfangsviskosität, ermittelt bei Zeit 0 Minuten erst nach einem Zeitraum von > 60 Minuten (Topfzeit).

Das Vergleichsbeispiel VB 6, enthaltend 400 ppm DBTL, zeigte unmittelbar nach der Mischung eine Viskosität von 63.000 mPas und war nach 30 Minuten polymerisiert, weshalb eine Viskositätsbestimmung nicht mehr möglich war.

Das Vergleichsbeispiel VB 7, enthaltend 40 ppm DBTL, zeigte eine Verdopplung der Anfangsviskosität ermittelt bei Zeit 0 Minuten schon nach weniger als 30 Minuten (Topfzeit).

Das Vergleichsbeispiel VB 8, ohne Katalysator, zeigte über 240 Minuten nahezu keine Veränderung der Viskosität.

### Filmherstellung und Infrarotmessung der NCO-Bande:

Die radikalisch härtbaren Aufbaumaterialien gemäß den erfindungsgemäßen Beispielen 1 bis 5 und den Vergleichsbeispielen VB 6 bis VB 8 wurden mit einem Rakel mit einem Spalt von 400 µm auf eine Glasplatte aufgezogen.

Die beschichteten Glassubstrate wurden anschließend in einer UV-Härtungsanlage der Firma *Superfici* mit Quecksilber- und Gallium-Strahlungsquellen mit einer Bandgeschwindigkeit von 5 m/min gehärtet. Aus Lampenleistung und Bandgeschwindigkeit resultiert eine Strahlungsintensität von 1.300 mJ/cm², die auf die beschichteten Substrate einwirkte.

Anschließend wurden die UV-gehärteten Filme auf den Glassubstraten in einen Trockenofen bei 150 °C unter Luftatmosphäre ausgelagert und zu den in Tabelle 3 aufgeführten Zeitpunkten für die jeweilige IR-Messung aus dem Ofen entnommen. Nach der Messung wurden die Proben wieder in den Ofen gelegt.

Für die Messung der freien NCO-Gruppen wurde ein FT-IR-Spektrometer (*Tensor II*) der Fa. *Bruker* eingesetzt. Der Probenfilm wurde auf die Platinum-ATR-Einheit kontaktiert. Die kontaktierte Fläche der Probe betrug 2 x 2 mm. Bei der Messung drang die IR-Strahlung je nach Wellenzahl 3 bis 4 µm in die Probe ein. Von der Probe wurde dann ein Absorptionsspektrum erstellt. Um eine ungleichmäßige Kontaktierung der unterschiedlich harten Proben zu kompensieren, wurde an allen Spektren eine Grundlinienkorrektur und eine Normierung im Wellenzahlbereich von 2600 bis 3200 (CH2, CH3) durchgeführt. Die Integration des Signals der NCO-Gruppen (in Tabelle 3 "Integral NCO" genannt) wurde im Wellenzahlbereich von 2170 bis 2380 durchgeführt. Für das Aufbaumaterial ohne Katalysator gemäß Vergleichsbeispiel VB 8 ergab sich nach Belichtung ein Zahlenwert von 510, während ein vollständig ausreagierter Film einen Zahlenwert von 0 aufwies. Als Ergebnis wurde ein Umsatz von > 70% der Isocyanatgruppen innerhalb von 1 h Nachhärtung angestrebt. Der NCO Umsatz wurde für die Betrachtung als lineare Funktion der Höhe des Flächenpeaks angenommen. Der Anfangswert des Vergleichsbeispiels VB 8 wurde als 0 % Umsatz definiert.

**Tabelle 3: "Integral NCO" nach UV-Härtung und Lagerung bei 150 °C**

| **Beispiel** | **1** | **2** | **3** | **4** | **5** | **6** | **7** | **8** |
|---|---|---|---|---|---|---|---|---|
| Zeit [Minuten] | Integral NCO (Umsatz [%]) | | | | | | | |
| 0 | 491,9 (4) | 504,2 (1) | 498,1 (2) | 492,8 (3) | 503,0 (1) | 50,0 (90) | 471,0 (8) | 510,0 (0) |
| 30 | 143,4 (72) | 127,6 (75) | 128,5 (75) | 58,3 (89) | 129,0 (75) | 29,0 (94) | 347,0 (32) | 488,0 (4) |
| 60 | 105,6 (79) | 101,2 (80) | 87,2 (83) | 65,8 (87) | 102,0 (80) | 41,0 (92) | 290,0 (43) | 358,0 (30) |
| 240 | 53,1 (90) | 49,0 (90) | 45,8 (91) | 32,3 (94) | 76,0 (85) | 13,0 (97) | 182,0 (64) | 261,0 (49) |
| 1.440 | 26,9 (95) | 34,1 (93) | 25,5 (95) | 22,1 (96) | 14,0 (97) | 11,0 (98) | 29,0 (94) | 76,0 (85) |

Die erfindungsgemäßen Beispiel 1 bis 5 zeigten einen signifikant schnelleren Abbau des NCO-Integrals als die Vergleichsbeispiele VB 6 und VB 7, enthaltend 400 bzw. 40 ppm DBTL. Während für alle erfindungsgemäßen Beispiele bereits nach 30 Minuten Lagerung bei 150 °C ein Umsatz der NCO-Gruppen ≥ 72 % erfolgte, haben im Vergleichsbeispiel VB 7, enthaltend 40 ppm DBTL, erst 32 % der NCO Gruppen reagiert. Nach 60 Minuten liegt der NCO-Umsatz für die erfindungsgemäßen Beispiele bei ≥ 79 %, während für Vergleichsbeispiel VB 7 der NCO-Umsatz erst 43 % beträgt.

Vergleichsbeispiel VB 6, enthaltend 400 ppm DBTL, zeigte schon unmittelbar nach der UV-Härtung ein sehr niedriges NCO-Integral von 50,0, was einem Umsatz von 90 % der NCO-Gruppen entsprach. Dies ist auf eine Reaktion vieler Isocyanatgruppen schon während der UV-Belichtung und der Probenvorbereitung für die Infrarotmessung, bedingt durch die hohe DBTL-Menge, zurückzuführen. Dies belegen auch die oben gezeigten Viskositätsmessungen nach unterschiedlichen Reaktionszeiten bei 23 °C.

Vergleichsbeispiel VB 8, ohne Katalysator, zeigte zwar auch eine Abnahme des NCO-Integrals über die Zeit, jedoch deutlich langsamer als bei den katalysierten Systemen. Erst nach 240 Minuten hatte ca. die Hälfte der NCO-Gruppen während der Lagerung bei 150 °C reagiert.

Zusammenfassend zeigten die Aufbaumaterialien gemäß den erfindungsgemäßen Beispielen 1 bis 5 enthaltend einen latent-reaktiven Katalysator eine wesentlich längere Topfzeit als die mit DBTL katalysierten Aufbaumaterialien gemäß den Vergleichsbeispielen VB 6 und VB 7. Gleichzeitig reagierten die erfindungsgemäßen Aufbaumaterialien deutlich schneller (NCO-OH-Reaktion) während der Lagerung bei 150 °C als ein Aufbaumaterial ohne Katalysator, wie DBTL, mit langer Topfzeit gemäß Vergleichsbeispiel VB 8. Diese Eigenschaftskombination belegt somit die angestrebte wärmelatente Wirkung der Katalysatoren gegenüber der herkömmlichen Katalyse der NCO-OH-Reaktion mittels DBTL und zeigt aufgrund der ausreichend langen Topfzeiten mit schneller Reaktion beim Erwärmen eine sehr gute Eignung zum Einsatz in Formulierungen, wie sie zum Beispiel im 3D-Druck oder in Lack- und Klebstoffapplikationen gewünscht ist.

## Patentansprüche

1. Verfahren zur Herstellung eines Gegenstands aus einem Aufbaumaterial, wobei das Aufbaumaterial radikalisch vernetzbare Gruppen, NCO-Gruppen sowie Gruppen mit Zerewitinoff-aktiven H-Atomen umfasst und der Gegenstand ein dreidimensionaler Gegenstand und/oder eine Schicht ist,
**dadurch gekennzeichnet, dass**
während und/oder nach der Herstellung des Gegenstands das Aufbaumaterial auf eine Temperatur von ≥ 50 °C erwärmt wird und dass
das Aufbaumaterial eine oder mehrere zyklische Zinnverbindungen der Formel F-I, F-II und/oder F-III umfasst: 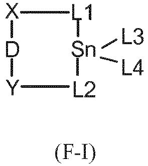 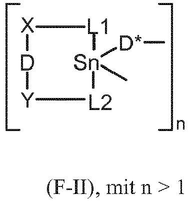 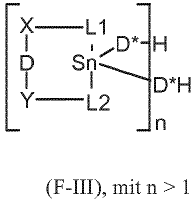 wobei gilt:
D steht für -O-, -S- oder -N(R1)-
wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 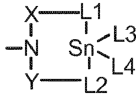 steht, oder R1 und L3 zusammen für -Z-L5- stehen;
D* steht für -O- oder -S-;
X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)- oder ortho-Arylenresten der Formeln 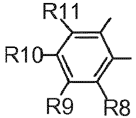 oder 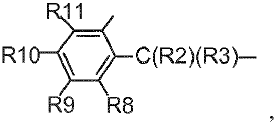 wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, -OC(=S)-, -SC(=O)-, - SC(=S)-, -OS(=O)₂O-, -OS(=O)₂- oder -N(R12)-,
wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Hal, -OC(=O)R14, -SR15, - OC(=S)R16, -OS(=O)₂OR17, -OS(=O)₂R18 oder -NR19R20, oder L3 und L4 zusammen stehen für -L1-X-D-Y-L2-,
wobei für R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.

2. Verfahren gemäß Anspruch 1, **dadurch gekennzeichnet, dass** der Gegenstand ein dreidimensionaler Gegenstand ist, aus einem Vorläufer erhalten wird und dass das Verfahren die Schritte umfasst:
I) Abscheiden von radikalisch vernetztem Aufbaumaterial auf einem Träger, so dass eine Lage eines mit dem Träger verbundenen Aufbaumaterials erhalten wird, welche einem ersten ausgewählten Querschnitt des Vorläufers entspricht;
II) Abscheiden von radikalisch vernetztem Aufbaumaterial auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist;
wobei das Abscheiden von radikalisch vernetztem Aufbaumaterial wenigstens in Schritt II) durch Belichten und/oder Bestrahlen eines ausgewählten Bereichs eines radikalisch vernetzbaren Aufbaumaterials, entsprechend dem jeweils ausgewählten Querschnitt des Vorläufers, erfolgt und
wobei das radikalisch vernetzbare Aufbaumaterial eine Viskosität (23 °C, DIN EN ISO 2884-1) von ≥ 5 mPas bis ≤ 1000000 mPas aufweist,
wobei das radikalisch vernetzbare Aufbaumaterial eine härtbare Komponente umfasst, in der NCO-Gruppen und olefinische C=C-Doppelbindungen vorliegen
und dass nach Schritt III) weiterhin Schritt IV) durchgeführt wird:
IV) Erwärmen des nach Schritt III) erhaltenen Vorläufers auf eine Temperatur von ≥ 50 °C, so dass der Gegenstand erhalten wird.

3. Verfahren gemäß Anspruch 2, **dadurch gekennzeichnet, dass**:
- der Träger innerhalb eines Behälters angeordnet ist und vertikal in Schwerkraftrichtung absenkbar ist,
- der Behälter das radikalisch vernetzbare Aufbaumaterial in einer Menge enthält, welche ausreicht, um wenigstens den Träger und eine in vertikaler Richtung gesehenen obersten Oberfläche von auf dem Träger abgeschiedenem vernetztem Aufbaumaterial zu bedecken,
- vor jedem Schritt II) der Träger um eine vorbestimmte Strecke abgesenkt wird, so dass über der in vertikaler Richtung gesehen obersten Lage des vernetzten Aufbaumaterials sich eine Schicht des radikalisch vernetzbaren Aufbaumaterials bildet und
- in Schritt II) ein Energiestrahl den ausgewählten Bereich der Schicht des radikalisch vernetzbaren Aufbaumaterials, entsprechend dem jeweils ausgewählten Querschnitt des Vorläufers, belichtet und/oder bestrahlt.

4. Verfahren gemäß Anspruch 2, **dadurch gekennzeichnet, dass**:
- der Träger innerhalb eines Behälters angeordnet ist und vertikal entgegen der Schwerkraftrichtung anhebbar ist,
- der Behälter das radikalisch vernetzbare Aufbaumaterial bereitstellt,
- vor jedem Schritt II) der Träger um eine vorbestimmte Strecke angehoben wird, so dass unter der in vertikaler Richtung gesehen untersten Lage des vernetzten Aufbaumaterials sich eine Schicht des radikalisch vernetzbaren Aufbaumaterials bildet und
- in Schritt II) eine Mehrzahl von Energiestrahlen den ausgewählten Bereich der Schicht des radikalisch vernetzbaren Aufbaumaterials, entsprechend dem jeweils ausgewählten Querschnitt des Vorläufers, gleichzeitig belichtet und/oder bestrahlt.

5. Verfahren gemäß Anspruch 2, **dadurch gekennzeichnet, dass**:
- in Schritt II) das radikalisch vernetzbare Aufbaumaterial aus einem oder mehreren Druckköpfen, entsprechend dem jeweils ausgewählten Querschnitt des Vorläufers, aufgetragen wird und anschließend belichtet und/oder bestrahlt wird.

6. Verfahren gemäß Anspruch 1, **dadurch gekennzeichnet, dass** der Gegenstand eine Beschichtung ist und das Verfahren die Schritte umfasst:
- Auftragen des Aufbaumaterials auf ein Substrat
- Einwirken von Wärme und/oder UV-Strahlung auf das aufgetragene Aufbaumaterial, so dass im aufgetragenen Aufbaumaterial eine zumindest teilweise Vernetzung der radikalisch vernetzbaren Gruppen erfolgt
- Erwärmen des aufgetragenen Aufbaumaterials auf eine Temperatur von ≥ 50 °C, so dass im aufgetragenen Aufbaumaterial zumindest teilweise eine Reaktion zwischen NCO-Gruppen und Gruppen mit Zerewitinoff-aktiven H-Atomen erfolgt.

7. Verfahren gemäß Anspruch 1, **dadurch gekennzeichnet, dass** der Gegenstand eine Klebeverbindung ist und das Verfahren die Schritte umfasst:
- Auftragen des Aufbaumaterials auf ein erstes Substrat
- Kontaktieren des aufgetragenen Aufbaumaterials mit einem zweiten Substrat
- Einwirken von Wärme und/oder UV-Strahlung auf das aufgetragene Aufbaumaterial, so dass im aufgetragenen Aufbaumaterial eine zumindest teilweise Vernetzung der radikalisch vernetzbaren Gruppen erfolgt
- Erwärmen des aufgetragenen Aufbaumaterials auf eine Temperatur von ≥ 50 °C, so dass im aufgetragenen Aufbaumaterial zumindest teilweise eine Reaktion zwischen NCO-Gruppen und Gruppen mit Zerewitinoff-aktiven H-Atomen erfolgt.

8. Verfahren gemäß einem der Ansprüche 1 bis 7, **dadurch gekennzeichnet, dass** das Aufbaumaterial weiterhin einen Radikalstarter und/oder einen Isocyanat-Trimerisierungskatalysator umfasst.

9. Verfahren gemäß einem der Ansprüche 1 bis 8, **dadurch gekennzeichnet, dass** das Aufbaumaterial aus der Vermischung einer NCO-Gruppen enthaltenden Komponente sowie einer Gruppen mit Zerewitinoff-aktiven H-Atomen enthaltenden Komponente erhalten wird und die Vermischung ≤ 5 Minuten vor Beginn des Verfahrens erfolgt.

10. Verfahren gemäß einem der Ansprüche 1 bis 9, **dadurch gekennzeichnet, dass** in der Definition gemäß Anspruch 1 D -N(R1)- ist und R1 Wasserstoff oder ein Alkyl-, Aralkyl-, Alkaryl- oder Arylrest mit bis zu 20 C-Atomen ist oder der Rest

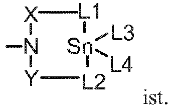

11. Verfahren gemäß einem der Ansprüche 1 bis 10, wobei in der Definition gemäß Anspruch 1 R1 Wasserstoff oder ein Methyl-, Ethyl-, Propyl-, Butyl-, Hexyl-, Octyl-, Ph-, oder CH₃Ph-Rest oder der Rest 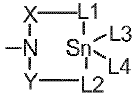 ist und wobei Propyl-, Butyl-, Hexyl-, und Octyl für alle isomeren Propyl-, Butyl-, Hexyl- sowie Octylreste stehen.

12. Verfahren gemäß einem der Ansprüche 1 bis 11, **dadurch gekennzeichnet, dass** in der Definition gemäß Anspruch 1 D* -O- ist.

13. Verfahren gemäß einem der Ansprüche 1 bis 12, **dadurch gekennzeichnet, dass** als zyklische Zinnverbindung eine oder mehrere der nachfolgenden Verbindungen eingesetzt werden:
4,12-Di-n-butyl-1,7,9,15-tetraoxa-4,12-diaza-8-stannaspiro[7.7]pentadecan,
4,12-Di-n-butyl-2,6,10,14-tetramethyl-1,7,9,15 -tetraoxa-4,12-diaza-8-stannaspiro[7.7]pentadecan,
2,4,6,10,12,14-Hexamethyl-1,7,9,15-tetraoxa-4,12-diaza-8-stannaspiro[7.7]pentadecan,
4,12-Di-n-octyl-2,6,10,14-tetramethyl-1,7,9,15-tetraoxa-4,12-diaza-8-stannaspiro[7.7]pentadecan,
4,12-Di-n-octyl-1,7,9,15-tetraoxa-4,12-diaza-8-stannaspiro[7.7]pentadecan,
4,12-Dimethyl-1,7,9,15-tetraoxa-4,12-diaza-8-stannaspiro[7.7]pentadecan,
1,1-Dichloro-5-methyl-5-aza-2,8-dioxa-1-stannacyclooctan,
1,1-Diisopropyl-5-methyl-5-aza-2,8-dioxa-1-stannacyclooctan,
1,1-Dibenzoyl-3,3,7,7-tetramethyl 5-n-octyl-5-aza-2,8-dioxa-1-stannacyclooctan,
1,1-Dibenzoyl- 5-n-octyl-5-aza-2,8-dioxa-1-stannacyclooctan,
1,1-Bis(p-dodecylphenylsulfonyl)- 5-n-octyl-5-aza-2,8-dioxa-1-stannacyclooctan,
2-Benzoyloxy-6-octyl-4,8-dioxo-1,3,6,2-dioxazastannocan-2-ylbenzoat
oder Mischungen davon.

14. Gegenstand, erhalten durch ein Verfahren gemäß einem der Ansprüche 1 bis 13, **dadurch gekennzeichnet, dass** der Gegenstand in Aufbaurichtung seines Herstellungsverfahrens wenigstens abschnittsweise eine Höhe von ≥ 1 mm aufweist.

15. Verwendung von zyklischen Zinnverbindungen der Formel F-I, F-II und/oder F-III, wie in Anspruch 1, 10, 11, 12 oder 13 definiert, als thermisch latente Urethanisierungskatalysatoren in Aufbaumaterialien in additiven Fertigungsverfahren.

## Claims

1. Process for producing an article made of a build material, wherein the build material comprises free-radically crosslinkable groups, NCO groups and groups having Zerewitinoff-active H atoms and the article is a three-dimensional article and/or a layer,
**characterized in that**
during and/or after production of the article the build material is heated to a temperature of ≥ 50°C and **in that** the build material comprises one or more cyclic tin compounds of formula F-I, F-II and/or F-III: 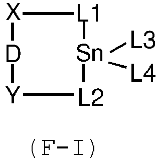 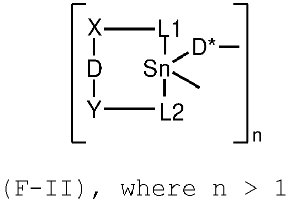 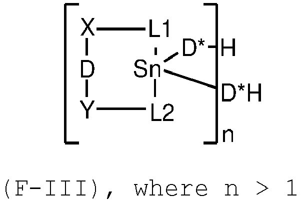 wherein:
D represents -O-, -S- or -N(R1)-
wherein R1 represents a saturated or unsaturated, linear or branched, aliphatic or cycloaliphatic radical or an optionally substituted aromatic or araliphatic radical which has up to 20 carbon atoms and may optionally contain heteroatoms from the group of oxygen, sulfur, nitrogen, or is hydrogen or the radical 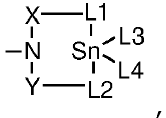 or R1 and L3 together represent -Z-L5-;
D* represents -O- or -S-;
X, Y and Z represent identical or different radicals selected from alkylene radicals of formulae -C(R2)(R3)-, -C(R2)(R3)-C(R4)(R5)- or -C(R2)(R3)-C(R4)(R5)-C(R6)(R7)- or ortho-arylene radicals of formulae 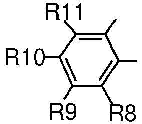 or 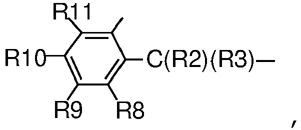 wherein R2 to R11 independently represent saturated or unsaturated, linear or branched, aliphatic or cycloaliphatic or optionally substituted aromatic or araliphatic radicals which have up to 20 carbon atoms and may optionally contain heteroatoms from the group of oxygen, sulfur, nitrogen, or are hydrogen; L1, L2 and L5 independently represent -O-, -S-, -OC(=O)--OC(=S)-, -SC(=O)-, -SC(=S)-, -OS(=O)₂O-, -OS(=O)₂- or -N(R12)-,
wherein R12 represents a saturated or unsaturated, linear or branched, aliphatic or cycloaliphatic radical or an optionally substituted aromatic or araliphatic radical which has up to 20 carbon atoms and may optionally contain heteroatoms from the group of oxygen, sulfur, nitrogen, or is hydrogen;
L3 and L4 independently represent -OH, -SH, -OR13, -Hal, -OC(=O)R14, -SR15, -OC(=S)R16, -OS(=O)₂OR17, -OS(=O)₂R18 or -NR19R20, or L3 and L4 together represent -L1-X-D-Y-L2-,
wherein R13 to R20 independently represent saturated or unsaturated, linear or branched, aliphatic or cycloaliphatic or optionally substituted aromatic or araliphatic radicals which have up to 20 carbon atoms and may optionally contain heteroatoms from the group of oxygen, sulfur, nitrogen, or are hydrogen.

2. Process according to Claim 1, **characterized in that** the article is a three-dimensional article and is obtained from a precursor and **in that** the process comprises the steps of:
I) depositing free-radically crosslinked build material atop a carrier to obtain a ply of a build material joined to the carrier which corresponds to a first selected cross section of the precursor;
II) depositing free-radically crosslinked build material atop a previously applied ply of the build material to obtain a further ply of the build material which corresponds to a further selected cross section of the precursor and which is joined to the previously applied ply;
III) repeating step II) until the precursor is formed;
wherein the depositing of free-radically crosslinked build material at least in step II) is effected by exposure and/or irradiation of a selected region of a free-radically crosslinkable build material corresponding to the respectively selected cross section of the precursor and
wherein the free-radically crosslinkable build material has a viscosity (23°C, DIN EN ISO 2884-1) of ≥ 5 mPas to ≤ 1 000 000 mPas,
wherein the free-radically crosslinkable build material comprises a curable component comprising NCO groups and olefinic C=C double bonds,
and **in that** step III) is followed by a further step IV):
IV) heating the precursor obtained after step III) to a temperature of ≥ 50°C to obtain the article.

3. Process according to Claim 2, **characterized in that**:
- the carrier is arranged inside a container and is vertically lowerable in the direction of the gravitational force,
- the container contains the free-radically crosslinkable build material in an amount sufficient to cover at least the carrier and an uppermost surface of crosslinked build material deposited on the carrier as viewed in the vertical direction,
- before each step II) the carrier is lowered by a predetermined distance so that above the uppermost ply of the crosslinked build material viewed in the vertical direction a layer of the free-radically crosslinkable build material is formed and
- in step II) an energy beam exposes and/or irradiates the selected region of the layer of the free-radically crosslinkable build material corresponding to the respectively selected cross section of the precursor.

4. Process according to Claim 2, **characterized in that**:
- the carrier is arranged inside a container and is vertically raisable counter to the direction of the gravitational force,
- the container provides the free-radically crosslinkable build material,
- before each step II) the carrier is raised by a predetermined distance so that below the lowermost ply of the crosslinked build material viewed in the vertical direction a layer of the free-radically crosslinkable build material is formed and
- in step II) a plurality of energy beams simultaneously exposes and/or irradiates the selected region of the layer of the free-radically crosslinkable build material corresponding to the respectively selected cross section of the precursor.

5. Process according to Claim 2, **characterized in that**:
- in step II) the free-radically crosslinkable build material is applied from one or more printing heads corresponding to the respectively selected cross section of the precursor and is subsequently exposed and/or irradiated.

6. Process according to Claim 1, **characterized in that** the article is a coating and the process comprises the steps of:
- applying the build material atop a substrate
- heating and/or UV-irradiating the applied build material to effect in the applied build material an at least partial crosslinking of the free-radically crosslinkable groups
- heating the applied build material to a temperature of ≥ 50 °C to effect in the applied build material at least in part a reaction between NCO groups and groups having Zerewitinoff-active H atoms.

7. Process according to Claim 1, **characterized in that** the article is an adhesive bond and the process comprises the steps of:
- applying the build material atop a first substrate
- contacting the applied build material with a second substrate
- heating and/or UV-irradiating the applied build material to effect in the applied build material an at least partial crosslinking of the free-radically crosslinkable groups
- heating the applied build material to a temperature of ≥ 50 °C to effect in the applied build material at least in part a reaction between NCO groups and groups having Zerewitinoff-active H atoms.

8. Process according to any of Claims 1 to 7, **characterized in that** the build material further comprises a free-radical starter and/or an isocyanate trimerization catalyst.

9. Process according to any of Claims 1 to 8, **characterized in that** the build material is obtained by mixing an NCO-containing component and a component containing groups having Zerewitinoff-active H atoms and the mixing is effected ≤ 5 minutes before commencement of the process.

10. Process according to any of Claims 1 to 9, **characterized in that** in the definition according to Claim 1 D is -N(R1)- and R1 is hydrogen or an alkyl, aralkyl, alkaryl or aryl radical having up to 20 carbon atoms or the radical

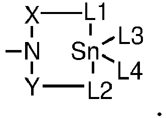

11. Process according to any of Claims 1 to 10, wherein in the definition according to Claim 1 R1 is hydrogen or a methyl, ethyl, propyl, butyl, hexyl, octyl, Ph, or CH₃Ph radical or the radical 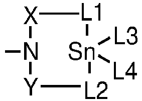 and wherein propyl, butyl, hexyl and octyl represent all isomeric propyl, butyl, hexyl and octyl radicals.

12. Process according to any of Claims 1 to 11, **characterized in that** in the definition according to Claim 1 D* is -O-.

13. Process according to any of Claims 1 to 12, **characterized in that** as the cyclic tin compound one or more of the following compounds are employed:
4,12-di-n-butyl-1,7,9,15-tetraoxa-4,12-diaza-8-stannaspiro[7.7]pentadecane,
4,12-di-n-butyl-2,6,10,14-tetramethyl-1,7,9,15-tetraoxa-4,12-diaza-8-stannaspiro[7.7]pentadecane,
2,4,6,10,12,14-hexamethyl-1,7,9,15-tetraoxa-4,12-diaza-8-stannaspiro[7.7]pentadecane,
4,12-di-n-octyl-2,6,10,14-tetramethyl-1,7,9,15-tetraoxa-4,12-diaza-8-stannaspiro[7.7]pentadecane,
4,12-di-n-octyl-1,7,9,15-tetraoxa-4,12-diaza-8-stannaspiro[7.7]pentadecane,
4,12-dimethyl-1,7,9,15-tetraoxa-4,12-diaza-8-stannaspiro[7.7]pentadecane,
1,1-dichloro-5-methyl-5-aza-2,8-dioxa-1-stannacyclooctane,
1,1-diisopropyl-5-methyl-5-aza-2,8-dioxa-1-stannacyclooctane,
1,1-dibenzoyl-3,3,7,7-tetramethyl 5-n-octyl-5-aza-2,8-dioxa-1-stannacyclooctane,
1,1-dibénzoyl-5-n-octyl-5-aza-2,8-dioxa-1-stannacyclooctane,
1,1-bis(p-dodecylphenylsulfonyl)-5-n-octyl-5-aza-2,8-dioxa-1-stannacyclooctane,
2-benzoyloxy-6-octyl-4,8-dioxo-1,3,6,2-dioxazastannocan-2-yl benzoate
or mixtures thereof.

14. Article obtained by a process according to any of Claims 1 to 13, **characterized in that** in the build direction of its production process at least in sections the article has a height of ≥ 1 mm.

15. Use of cyclic tin compounds of formula F-I, F-II and/or F-III as defined in Claim 1, 10, 11, 12 or 13 as thermally latent urethanization catalysts in build materials in additive manufacturing processes.

## Revendications

1. Procédé pour la fabrication d'un objet à partir d'un matériau de construction, le matériau de construction comprenant des groupes réticulables de manière radicalaire, des groupes NCO ainsi que des groupes dotés d'atomes de H actifs au sens de Zéréwitinoff et l'objet étant un objet tridimensionnel et/ou une couche,
**caractérisé en ce que**
pendant et/ou après la fabrication de l'objet, le matériau de construction est chauffé à une température de ≥ 50 °C et **en ce que** le matériau de construction comprend un ou plusieurs composés cycliques de l'étain de formule F-I, F-II et/ou F-III : 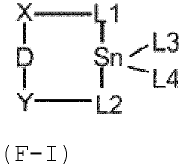 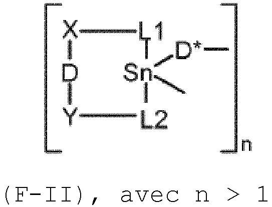 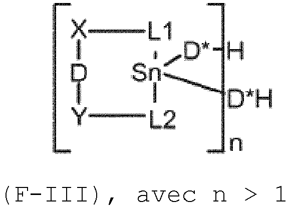 ceci s'appliquant :
D représentant -O-, -S- ou -N(R1)-,
R1 représentant un radical saturé ou insaturé, linéaire ou ramifié, aliphatique ou cycloaliphatique, ou un radical aromatique ou araliphatique éventuellement substitué, comportant jusqu'à 20 atomes de carbone, qui peut éventuellement contenir des hétéroatomes de la série oxygène, soufre, azote, ou représentant hydrogène ou le radical 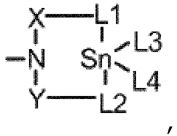 ou R1 et L3 représentant ensemble -Z-L5- ;
D* représentant -O- ou -S- ;
X, Y et Z représentant des radicaux identiques ou différents choisis parmi des radicaux alkylène de formule -C (R2) (R3) -, -C (R2) (R3) -C (R4) (R5) - ou - C(R2) (R3)-C(R4) (R5)-C(R6) (R7)- ou
des radicaux ortho-arylène de formule 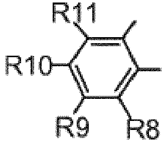 ou 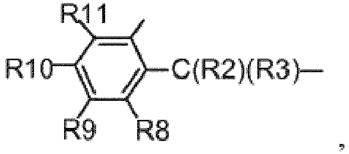 R2 à R11 représentant indépendamment les uns des autres des radicaux saturés ou insaturés, linéaires ou ramifiés, aliphatiques ou cycloaliphatiques, ou des radicaux aromatiques ou araliphatiques éventuellement substitués, comportant jusqu'à 20 atomes de carbone, qui peuvent éventuellement contenir des hétéroatomes de la série oxygène, soufre, azote, ou représentant hydrogène ;
L1, L2 et L5 représentant indépendamment les uns des autres -O-, -S-. -OC(=O)-. -OC(=S)-, -SC(O))-,-SC(=S) -, -OS(=O)₂O-, -OS(=O)₂- ou -N(R12)-,
R12 représentant un radical saturé ou insaturé, linéaire ou ramifié, aliphatique ou cycloaliphatique, ou un radical aromatique ou araliphatique éventuellement substitué, comportant jusqu'à 20 atomes de carbone, qui peut éventuellement contenir des hétéroatomes de la série oxygène, soufre, azote, ou représentant hydrogène ;
L3 et L4 représentant indépendamment l'un de l'autre -OH, -SH, -OR13, -hal, -OC(=O)R14, -SR15, - OC(=S)R16, -OS(=O)₂OR17, -OS(=O)₂R18 ou -NR19R20, ou L3 et L4 représentant ensemble -L1-X-D-Y-L2-,
R13 à R20 représentant indépendamment les uns des autres des radicaux saturés ou insaturés, linéaires ou ramifiés, aliphatiques ou cycloaliphatiques, ou des radicaux aromatiques ou araliphatiques éventuellement substitués, comportant jusqu'à 20 atomes de carbone, qui peuvent éventuellement contenir des hétéroatomes de la série oxygène, soufre, azote, ou représentant hydrogène.

2. Procédé selon la revendication 1, **caractérisé en ce que** l'objet est un objet tridimensionnel, que l'objet est obtenu à partir d'un précurseur et que le procédé comprenant les étapes :
I) dépôt de matériau de construction réticulé de manière radicalaire sur un support, de sorte qu'une couche d'un matériau de construction relié avec le support est obtenue, qui correspond à une première section choisie du précurseur ;
II) dépôt de matériau de construction réticulé de manière radicalaire sur une couche déposée précédemment du matériau de construction, de sorte qu'une couche supplémentaire du matériau de construction est obtenue, qui correspond à une section choisie supplémentaire du précurseur et qui est reliée avec la couche déposée précédemment ;
III) répétition de l'étape II), jusqu'à ce que le précurseur soit formé ;
le dépôt de matériau de construction réticulé de manière radicalaire étant réalisé au moins dans l'étape II) par exposition et/ou par irradiation d'une zone choisie d'un matériau de construction réticulable de manière radicalaire, correspondant à la section choisie à chaque fois du précurseur, et le matériau de construction réticulable de manière radicalaire présentant une viscosité (23 °C, DIN EN ISO 2884-1) de ≥ 5 mPas à ≤ 1 000 000 mPas,
le matériau de construction réticulable de manière radicalaire comprenant un composant durcissable dans lequel des groupes NCO et des doubles liaisons oléfiniques C=C sont présents
et **en ce qu'**après l'étape III), en outre une étape IV) est mise en œuvre :
IV) chauffage du précurseur obtenu après l'étape III) à une température de ≥ 50 °C, de sorte que l'objet est obtenu.

3. Procédé selon la revendication 2, **caractérisé en ce que** :
- le support est disposé à l'intérieur d'un récipient et peut être abaissé verticalement suivant la direction de la pesanteur,
- le récipient contient le matériau de construction réticulable de manière radicalaire en une quantité qui suffit pour recouvrir au moins le support et une surface supérieure, du point de vue d'une direction verticale, de matériau de construction réticulé déposé sur le support,
- avant chaque étape II), le support est abaissé d'une distance prédéterminée de sorte qu'au-dessus de la couche supérieure, du point de vue d'une direction verticale, du matériau de construction réticulé, une couche du matériau de construction réticulable de manière radicalaire se forme et
- dans l'étape II), un rayonnement d'énergie expose et/ou irradie la zone choisie de la couche du matériau de construction réticulable de manière radicalaire, correspondant à la section choisie à chaque fois du précurseur.

4. Procédé selon la revendication 2, **caractérisé en ce que** :
- le support est disposé à l'intérieur d'un récipient et peut être levé verticalement à l'opposé de la direction de la pesanteur,
- le récipient fournit le matériau de construction réticulable de manière radicalaire,
- avant chaque étape II), le support est levé d'une distance prédéterminée, de sorte qu'en dessous de la couche inférieure, du point de vue d'une direction verticale, du matériau de construction réticulé, une couche du matériau de construction réticulable de manière radicalaire se forme et
- dans l'étape II), une pluralité de rayonnements d'énergie expose et/ou irradie simultanément la zone choisie de la couche du matériau de construction réticulable de manière radicalaire, correspondant à la section choisie à chaque fois du précurseur.

5. Procédé selon la revendication 2, **caractérisé en ce que** :
- dans l'étape II), le matériau de construction réticulable de manière radicalaire est appliqué à partir d'une ou plusieurs têtes d'impression correspondant à la section choisie à chaque fois du précurseur et à la suite est exposé et/ou irradié.

6. Procédé selon la revendication 1, **caractérisé en ce que** l'objet est un revêtement et le procédé comprenant les étapes :
- application du matériau de construction sur un substrat
- action de chaleur et/ou de rayonnement UV sur le matériau de construction appliqué, de sorte que dans le matériau de construction appliqué une réticulation au moins partielle des groupes réticulables de manière radicalaire est réalisée
- chauffage du matériau de construction appliqué à une température ≥ 50 °C, de sorte que, dans le matériau de construction appliqué, au moins partiellement une réaction entre des groupes NCO et des groupes comportant des atomes de H actifs selon Zéréwitinoff est réalisée.

7. Procédé selon la revendication 1, **caractérisé en ce que** l'objet est un assemblage collé et le procédé comprend les étapes :
- application du matériau de construction sur un premier substrat
- mise en contact du matériau de construction appliqué avec un deuxième substrat
- action de chaleur et/ou de rayonnement UV sur le matériau de construction appliqué, de sorte que dans le matériau de construction appliqué une réticulation au moins partielle des groupes réticulables de manière radicalaire est réalisée
- chauffage du matériau de construction appliqué à une température ≥ 50 °C, de sorte que, dans le matériau de construction appliqué, au moins partiellement une réaction entre des groupes NCO et des groupes comportant des atomes de H actifs selon Zéréwitinoff est réalisée.

8. Procédé selon l'une quelconque des revendications 1 à 7, **caractérisé en ce que** le matériau de construction comprend en outre un amorceur de radicaux et/ou un catalyseur de trimérisation d'isocyanate.

9. Procédé selon l'une quelconque des revendications 1 à 8, **caractérisé en ce que** le matériau de construction est obtenu à partir du mélange d'un composant contenant des groupes NCO ainsi que d'un composant contenant des groupes comportant des atomes de H actifs selon Zéréwitinoff et le mélange est réalisé ≤ 5 minutes avant le début du procédé.

10. Procédé selon l'une quelconque des revendications 1 à 9, **caractérisé en ce que** dans la définition selon la revendication 1, D est -N(R1)- et R1 est hydrogène ou un radical alkyle, aralkyle, alkaryle ou aryle comportant jusqu'à 20 atomes de C ou est le radical

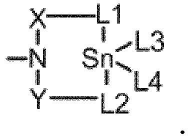

11. Procédé selon l'une quelconque des revendications 1 à 10, dans lequel dans la définition selon la revendication 1, R1 est hydrogène ou un radical méthyle, éthyle, propyle, butyle, hexyle, octyle, Ph ou CH₃Ph ou le radical 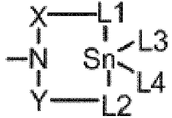 et propyle, butyle, hexyle, et octyle représentant tous les radicaux isomériques propyle, butyle, hexyle ainsi qu'octyle.

12. Procédé selon l'une quelconque des revendications 1 à 11, **caractérisé en ce que** dans la définition selon la revendication 1, D* est -O-.

13. Procédé selon l'une quelconque des revendications 1 à 12, **caractérisé en ce qu'**en tant que composé cyclique de l'étain, un ou plusieurs des composés suivants sont utilisés :
4,12-di-n-butyl-1,7,9,15-tétraoxa-4,12-diaza-8-stannaspiro[7.7]pentadécane,
4,12-di-n-butyl-2,6,10,14-tétraméthyl-1,7,9,15-tétraoxa-4,12-diaza-8-stannaspiro[7.7]pentadécane,
2,4,6,10,12,14-hexaméthyl-1,7,9,15-tétraoxa-4,12-diaza-8-stannaspiro[7.7]pentadécane,
4,12-di-n-octyl-2,6,10,14-tétraméthyl-1,7,9,15-tétraoxa-4,12-diaza-8-stannaspiro[7.7]pentadécane,
4,12-di-n-octyl-1,7,9,15-tétraoxa-4,12-diaza-8-stannaspiro[7.7]pentadécane,
4,12-diméthyl-1,7,9,15-tétraoxa-4,12-diaza-8-stannaspiro[7.7]pentadécane,
1,1-dichloro-5-méthyl-5-aza-2,8-dioxa-1-stannacyclooctane,
1,1-diisopropyl-5-méthyl-5-aza-2,8-dioxa-1-stannacyclooctane,
1,1-dibénzoyl-3,3,7,7-tétraméthyl-5-n-octyl-5-aza-2,8-dioxa-1-stannacyclooctane,
1,1-dibenzoyl-5-n-octyl-5-aza-2,8-dioxa-1-stannacyclooctane,
1,1-bis(p-dodécylphénylsulfonyl)-5-n-octyl-5-aza-2,8-dioxa-1-stannacyclooctane,
benzoate de 2-benzoyloxy-6-octyl-4,8-dioxo-1,3,6,2-dioxazastannocan-2-yle
ou des mélanges correspondants.

14. Objet, obtenu par un procédé selon l'une quelconque des revendications 1 à 13, **caractérisé en ce que** l'objet, dans la direction de construction de son procédé de fabrication, présente au moins par sections une hauteur de ≥ 1 mm.

15. Utilisation de composés cycliques de l'étain de formule F-I, F-II et/ou F-III, tels que définis dans la revendication 1, 10, 11, 12 ou 13, en tant que catalyseurs de formation d'uréthane thermiquement latents dans des matériaux de construction dans des procédés de fabrication additive.
